(19) Europäisches Patentamt
European Patent Office
Office européen des brevets

(11) **EP 4 187 123 A1**

(12) **EUROPEAN PATENT APPLICATION**

(43) Date of publication:
**31.05.2023 Bulletin 2023/22**

(21) Application number: **21211462.3**

(22) Date of filing: **30.11.2021**

(51) International Patent Classification (IPC):
**F16F 15/00** (2006.01)    **G05D 19/00** (2006.01)
**F02C 3/107** (2006.01)    **F02C 9/00** (2006.01)

(52) Cooperative Patent Classification (CPC):
**F16F 15/002; F02C 7/06; G05D 19/00;**
F05D 2260/96; F05D 2270/023; F05D 2270/114

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Rolls-Royce Deutschland Ltd & Co KG
15827 Blankenfelde-Mahlow (DE)**

(72) Inventor: **CICIRIELLO, Lucia
15827 Blankenfelde-Mahlow (DE)**

(74) Representative: **Maikowski & Ninnemann
Patentanwälte Partnerschaft mbB
Postfach 15 09 20
10671 Berlin (DE)**

(54) **METHOD AND SYSTEM FOR REDUCING VIBRATIONS IN ROTATING MACHINERY**

(57) Embodiments of the invention are shown in the figures, wherein a method for controlling an apparatus (1; 10) having at least a first rotatable component (26, 27, 32, 54) and a second rotatable component (26, 27, 32, 54) comprises: determining (S1), by a control system (2), a speed of each of the rotatable components (26, 27, 32, 54), wherein at least one of the speeds is an orbiting speed of an orbiting motion of one of the rotatable components (26, 27, 32, 54) around a nominal rotational axis (9) thereof; and controlling (S3), by the control system (2), rotation of at least one of the rotatable components (26, 27, 32, 54) depending on a speed ratio (R) of the speeds of the rotatable components (26, 27, 32, 54).

Fig. 8

**Description**

**Description**

The present disclosure relates to a method and a control system for controlling an apparatus, and to an apparatus comprising such a control system.

A common problem in the field of rotating machinery is controlling the level of vibration. Vibration may be caused by imbalances of a shaft and supported rotatable elements, such as, e.g., compressor and turbine discs and blades in gas turbine engines, and also external forcing such as, e.g., aircraft maneuvers and aerodynamic forces in the aircraft. Damping systems such as fluid dampers are commonly employed to reduce vibrations.

Vibrations are specifically pronounced at particular rotational speeds and/or frequencies, known as "critical" speeds, in view of resonances of the rotating system. It is known that in multi-shaft engines critical cross-shaft resonances exist, where a cross shaft resonance is a condition where excitation generated by one or more shafts are able to excite natural frequencies that generate vibration on the other shaft. It is worth noting that the common damping arrangements located at the bearing can be ineffective to reduce cross shaft vibrations.

At the critical speeds systems commonly vibrate in resonance, a condition at which vibrations are sustained by the system internal vibratory response determined by the designed stiffness, inertia and damping. The damping system is commonly designed such that its capabilities are not exceeded in use. In many cases the damping system and other components, such as a supporting structure, correspondingly have a relatively high weight. In many fields however, for example, aerospace, weight is an important consideration.

It is worth noting that damping systems typically only reduce the effects of vibrations, in particular resonances, without eliminating the cause. It should also be noted that at certain unbalances and external forcing levels, the vibrations in resonance are determined and influenced by the stiffness to inertia distribution of the whole arrangement which is generally difficult to modify.

Vibration may be caused by imbalances of rotating parts, such as a shaft and supported rotatable elements, such as, e.g., compressor and turbine discs and blades in gas turbine engines, and also external forcing such as, e.g., aircraft maneuvers and aerodynamic forces in the aircraft. In hydrodynamic journal bearings and other components, fluid-excited instabilities may occur at certain operating conditions, in particular at high speeds. Oil film induced vibrations may cause additional dynamic (in particular cyclic) displacements onto the rotor (e.g., journal) with the effect of increasing the orbits of the rotors. Precession orbits may appear in superposition with the journal spinning and appear combined in different ways depending on the possibilities given by the system clearances and degrees of freedom of the journal shaft (e.g., a system where the axes of the journals are carried in precession may present several onsets of orbiting, each one corresponding to specific frequencies in the vibration signature.

Precession orbits can be backwards or forwards with respect to the journal or shaft sense of rotation and this also change the frequency in the vibrational signature. Oil film induced vibrations can increase the shaft orbits or, in case the shaft is prevented to orbit any further, in turn may variate the oil film gap and, therefore, the oil pressure distribution. By this, also the rotor clearances and the shaft alignment may be influenced.

The oil film induced vibrations can appear both in a stable or instable onset, the difference depending on whether the magnitude of the vibration remains constant versus time, in stationary speed and loads, or increases rapidly also at steady conditions.

Stable oil film-induced vibrations are often indicated with the term oil whirl (wherein the term whirl relates to orbits), whilst with the term the oil whip vibrations having a divergent, commonly instable behavior are indicated. The oil whip has the same mechanism as the oil whirl but can be more critical and is almost always instable, because in this case the periodic force induced by the oil film excites a rotor resonance. Even though this distinction is correct in most cases, there are also instable oil whirl and relatively stable oil whip (the latter being anyways dangerous because the rotor can suddenly become incontrollable causing metal to metal contacts).

Oil whirl can be sub-synchronous or synchronous with respect to the rotor. Whether the precessional orbit is travelled, e.g., by a journal at about half of the rotor speed or at a speed close or equal to the rotor speed, depends on speed and load conditions. It is worth adding that if the journal bearing axis is mounted on a system that moves with a drag speed with respect to a fixed frame, as a carrier shaft in a planetary gearbox for instance, then the frequencies of the orbits (or vibrations) need to be algebraically summed with the drag speed frequency. The plus (+) or minus (-) sign in the algebraic sum that determines the frequency of the gap-dependent orbit as seen by a fixed frame is dependent on the sense of rotation of the orbit with respect to the carrier (same direction +, opposite direction -). The frequency at which the precessional orbit is travelled is related to the average tangential speed of the oil film mass contained in the journal bearing. When oil whirl and oil whip set in, hydraulic forces may destabilize and increase the motion of the rotor and induce a self-excited vibration. Such a vibration typically has very high amplitudes.

In turn, the rotor can be forced into a large eccentricity that could even lead to a collision with another component. This effect may thus reduce the lifetime of the journal bearing or could even cause a sudden failure. Particularly stiffer rotor systems with reduced clearances are prone to detrimental oil film instability when the journal bearing undergoes high loads and speeds.

Similar effects occur at other types of rotatable components, and also in rotating systems with fluids other than oil, e.g., in systems with gases or gas mixtures, such as air, in a gap between the rotating components. As an example, a non-uniform blade tip clearance distribution of a turbine disc due to a displacement of a rotor shaft during vibration may produce a force that causes an instability. Such forces are commonly referred to as Alford forces. Corresponding forces in compressors are often referred to as Wachel forces. In electrical machines, e.g., in electric motors and in electric generators, corresponding effects lead to a phenomenon typically referred to as unbalanced magnetic pull. The vibrations due to gap-dependent forces are generated by the reaction of oil, air or magnetic fields to the changes in the radial gaps between rotors and stators that are not symmetrical in circumferential direction, in filling cavities, bearing chambers and the like.

While such vibrations due to gap-dependent forces may lead to an increased wear of parts of the machinery or even a failure of these parts, it has been difficult to detect an onset of these forces early enough and in a reliable manner.

It is an object to reduce vibrations in rotating machinery.

According to a first aspect there is provided a method for controlling an apparatus, the apparatus having at least a first rotatable component and a second rotatable component.

The method comprises determining, by a control system (e.g., by means of one or more sensors and/or speed signals extracted by the control system), a speed of each of the rotatable components, wherein at least one of the speeds is an orbiting speed of one of the rotatable components around a nominal rotational axis thereof. The method further comprises controlling, by the control system, rotation of at least one of the rotatable components depending on the speeds of the rotatable components, particularly, as a speed ratio of the speeds of the rotatable components.

That is, at least one of the rotatable components is undergoing an orbiting motion superimposed to its rotational (spin) speed. The orbit may be regarded as a trajectory of the center of the rotatable component. The orbit may describe a precession. Notably, also axial movements are possible, e.g., in combination with radial movements, that define the orbit trajectory depending on the axial clearances and deformability.

This is based on the finding that the speed of an orbiting motion of a first rotatable component, e.g., a shaft, and a speed of another rotatable component, e.g., another shaft, of the apparatus may interfere with one another with the result that vibrations in the apparatus are amplified. Therein, it has been further found that specific rotor spin speed ratios may lead to stronger vibration excitations than other speed ratios. By controlling the rotation of one or more rotatable components of the apparatus taking into account the speed ratio, with at least one speed being an orbiting speed (the orbiting speed may be defined as being equal to k times the rotational speed, where k is a rational number, with sign, that can change upon the engine conditions), it is possible to further strongly reduce vibrations in the apparatus. As a result, wear of the rotatable components and other components may be mitigated, so that in turn their weight may be reduced, and their lifetime increased. Further, also damping may be constructed lighter. The speed of each of the rotatable components may be a rotational speed or an orbiting speed. In the speed ratio, at least one of the speeds is the orbiting speed. The orbiting speed is a fraction or a multiple of the rotor rotational spin speed, e.g., N1 orbit = 0.44 x N1 rotational speed (of the N1 shaft), or N1 orbit = 1.6 x N1. For example, the control system starts from a ratio avoidance between at least one orbiting speed and a shaft rotational speed such as (rotational speed shaft 2) / (orbiting speed shaft 1) ≠ integer. A final condition provided to a speed controller can be a ratio between two rotational speeds N2/N1.

The (rotational as well as the orbiting) speed may be indicated as an angular velocity or as a frequency, e.g., as rotations per time unit, e.g., per minute (RPM). The rotational components are rotatable with respect to one another and/or with respect to a stationary support structure. The orbiting speed of each of the rotatable components may particularly be non-synchronous with the rotational speed of the same component. That is, the orbiting speed may be higher (super-synchronous) or lower (sub-synchronous) than the rotational speed. The orbiting motion may correspond to the motion of at least a part of the respective rotational component, e.g., an end portion thereof. The orbiting motion describes the motion of the center of the rotatable component, e.g., shaft. The orbiting motion may be a motion within a clearance in which the rotatable component is mounted (e.g., of a journal bearing or magnetic bearing, or the air gap of an electrical machine or the like). For example, the orbit speed (e.g., as in terms of a frequency) is measured or given by a look-up table, and a shaft rotational speed is variated by the control system to avoid the above-mentioned periodicities.

The apparatus may be a gas turbine or an engine, e.g. a gas turbine engine. The shafts may transmit torque. For example, each of the shafts drives a component of the apparatus. The rotation of the shafts is defined, e.g., with respect to a stationary support structure with respect to which each of the shafts is rotatable. The shafts may be rotatable with a variable ratio of rotational speeds with respect to one another.

The first and/or the second rotatable component may (each) be a shaft.

Controlling operation (e.g., rotation) of the at least one of the shafts depending on the speed ratio may comprise restricting the rotation of the shafts to predetermined speed ratios. Other speed ratios, in particular speed ratios that lead to stronger cross-shaft vibrations, are excluded.

In particular, controlling rotation of the at least one of the shafts depending on the speed ratio (the speed of one of the shafts divided by the speed of another one of the shafts, wherein at least one of the speeds is an orbiting speed, wherein, e.g., the larger speed value is divided by the smaller speed value) may be performed so as to avoid integer ratios (or substantially integer ratios) between one rotational speed and at least one orbit speed of the shafts. The one or more shafts may be controlled to rotate only at speeds that do not lead to a predetermined speed ratio value, in particular an integer speed ratio between one rotational speed and at least one orbit speed. In other words, it may be avoided that one shaft rotates at a speed that is a multiple of the orbiting speed of another shaft (or vice versa). It has been found that integer speed ratios, in particular larger than 1, of two shafts of an apparatus may lead to strongly increased vibrations by cross-excitation and may generate low-frequency modulations that may generate detrimental interactions with the controllers and generate further variations of the gaps between rotors and stators with the effect of augmenting the forces that are producing the rotor orbits, i.e., by driving vibrations from one shaft to one or more of the other shafts. Two shafts orbiting at integer speed ratios are particularly able to generate periodic excitations that are in phase. The integer ratios may generate the highest numbers of periodicities or pattern repetitions, whereas ratios between prime numbers (irrational) may represent the minimum possible pattern repetitions. The lower the integer the higher the number of repetitive patterns (the number of repetitive patterns is proportional to the fatigue number of cycles potentially excited). These repeated inter-shaft periodicities may become particularly detrimental if they happen at a resonant frequency. In that case, the unbalance of two shafts can excite the frequency or the unbalance of one shaft can cross-excite an orbit of another shaft. For example, where N2, N1 represent generic rotational speeds (e.g., in terms of frequencies), with N2/N1=1, the shafts are in phase every revolution, i.e., synchronous. With N2/N1=2, the shafts are in phase every second revolution for N2, every revolution for N1. With N2/N1 =1.5=3/2, the shafts are in phase every 3 revolutions for N2 and every 2 revolutions for N1 etc. This may excite and maintain vibrating cross-shaft resonances. By avoiding such integer speed ratios, it is thus possible to strongly reduce vibrations in or of the apparatus. This can be particularly beneficial because in practice it is often difficult or impossible to completely avoid cross-shaft excitations and resonances by design, because of inter-bearing shafts, gear-mesh, or simply because the bearing mountings of two different shafts are connected to engine frames and do not have infinite stiffness. Other speed ratios that in a given apparatus also lead to specifically strong vibrations may be determined by simulations and/or measurements and avoided alternatively or in addition to integer (or substantially integer) ratios. Optionally, the apparatus comprises three or more shafts and the method comprises avoiding any conditions at which two pairings of the three or more shafts orbit (or orbit and rotate, respectively) at integer speed ratios.

Optionally, both speeds, i.e., the speed of the first shaft and the speed of the second shaft, are orbiting speeds. It has been found that even orbiting motions of two shafts may interfere with each other. Thus, by accounting for such ratios, vibrations may be strongly decreased. Alternatively, one of the speeds is a rotational speed, the other an orbiting speed.

The method may further comprise determining, e.g., measuring, an orbiting speed (alternatively, or in addition, a rotational speed) of the first shaft and/or a (e.g., corresponding) speed of the second shaft (and/or, optionally, the speed of a third shaft or additional shafts). By this, the current shaft speeds may be taken into account. The measurement(s) can be made using one or more speed sensors.

Optionally, determining the at least one orbiting speed of one of the shafts comprises measuring, by the control system using a sensor, a frequency. Alternatively, or in addition, a sensor may be adapted to provide signals indicative for a motion and/or a force and/or a torque applied on the shaft. The sensor may be an acceleration sensor, a proximity sensor, a velocimeter or the like. The sensor may detect movements or forces in radial and/or tangential direction. Alternatively, or in addition, the sensor may detect movements or forces in axial direction.

Optionally, an electrical machine having a rotor and a stator rotatable with respect to one another (e.g., an electric motor and/or generator) acts as the sensor. This allows a particularly precise measurement, optionally without additional sensors.

Alternatively, or in addition, determining the speed of each of the shafts comprises determining the speed of at least one of the shafts by reading a value stored in a look-up table. For example, a rotational speed or orbiting speed of a shaft that corresponds to a certain operational status may be determined as an entry in the look-up table. By this, the number of sensors may be reduced and an orbiting motion may be prevented.

The method may further comprise calculating the speed ratio of the determined speeds of the first and second shafts. Controlling rotation of the at least one of the shafts may be performed depending on the calculated speed ratio (of the speeds the shafts are currently rotating or orbiting, respectively). A condition of integer avoidance on the spin-orbit or orbit-orbit ratios will always be correspondent to a certain rotational speed ratio to be avoided (this time not necessarily integer). Controlling rotation may be performed based on this corresponding (spin-spin) rotational speed ratio. The method may further comprise determining whether or not the calculated speed ratio is within a predetermined distance to and/or interval around an integer. In this case an adjustment of a control parameter may be triggered.

Controlling rotation of the at least one of the shafts (e.g., triggering a predefined control operation) may be performed in response to determining that the calculated speed ratio is within the predetermined interval around an integer. The interval may be a fixed range around the integer, e.g., +/- 0.01 or +/- 0.05 or +/- 0.1, or it may be a relative range, e.g., +/- 1% or +/- 5% or +/- 10% of the speed ratio R.

Controlling rotation of the at least one of the shafts may comprise controlling the at least one of the shafts so as to increase or decrease its speed, e.g., when the speed ratio is within the predetermined distance to or interval around a predetermined value, in particular an integer. For example, rotational speed ratios with an avoidance range that depends on an orbit coefficient k are applied. The ratio it is not required to be an exact integer even though it can be close to an integer. The following formula (Orbit=k * rotational speed) gives the speed of an orbit (in terms of a frequency) as a function of the rotational speed of the shaft. The coefficient k is not necessarily constant versus engine regulation conditions. The rotational speed avoidance ranges may be defined by intervals. The increase of vibrations may particularly be present in a given interval around integer numbers of the speed ratios. Controlling the at least one of the shafts so as to increase or decrease its speed may be performed by moving a variable device of the apparatus. The variable device may be adapted to control a flow of a fluid. Optionally, the apparatus is a gas turbine (in particular a gas turbine engine). The variable device may comprise at least one variable stator vane and/or at least one variable inlet guide vane, in particular of a compressor. By this the rotational speed of the corresponding shaft may be increased or decreased, e.g., to avoid an integer value. The method may further comprise determining a level of vibrations at the apparatus. The level of vibrations may then be compared with a predetermined threshold. Controlling rotation of the at least one of the shafts depending on the speed ratio of the speeds of the shafts can then be performed (in particular triggered) when (e.g., only when) the level of vibrations exceeds the predetermined threshold. By this it is possible to reduce interventions, e.g., in cases where a relative level of vibrations is increased (e.g., at a peak value), but at a low absolute value. Tolerable vibrations may thus be allowed. Alternatively, or in addition, integer speed ratios may be tolerated (e.g., do not trigger an adjustment of a control parameter) when one or more shafts orbit or rotate at a predetermined range of speeds, e.g., speeds that were proven to not be prone to strong vibrations. Optionally, the apparatus is an engine. Controlling rotation of at least one of the shafts may comprise incrementing or decrementing a power setting of the engine. By this, the speed ratio may be adjusted so as to avoid an integer value. Controlling rotation may be performed by changing a fuel flow (and/or electrical current) to effect an increase or decrease in power.

Controlling rotation of at least one of the rotatable components may comprise decreasing or increasing a temperature and/or a pressure of a fluid, e.g., of a bearing of one or both of the rotatable components or of the air and/or metal of a section of a gas turbine or compressor. Alternatively, or in addition, controlling rotation of at least one of the rotatable components may comprise decreasing or increasing a magnetic force, e.g., a magnetic force acting on one or both of the rotatable components, e.g., by means of an electric machine (e.g., an electric motor) and/or a magnetic bearing.

Optionally, a database may be provided, the database storing a plurality of possible operational statuses of the apparatus and (appropriate) speeds, in particular speed set points, of the shafts for each operational status (in particular having no integer ratio). The method may further comprise controlling the apparatus using the database. Alternatively or in addition to a calculation of current speed ratios of measured shaft speeds the database may initially and/or adaptively be created so that for each operational status (e.g., different power settings) one or more sets of speeds of the shafts are stored which avoid large-vibration speed ratios, in particular integer speed ratios. The database is then created depending on one or more speed ratios of speeds of the shafts, and one or more shafts of the apparatus are controlled using the database (and thus also depending on one or more shaft speed ratios). The speeds in the database may be optimized for a fuel efficiency. Optionally, the database comprises at least one series of possible successive operational statuses and appropriate speeds of the shafts for each operational status, in particular having no integer ratio. In the example of a gas turbine engine, a series of operational statuses may be a flight profile or a part thereof. By this, crossing of integer speed ratios may be systematically avoided.

According to an aspect, a method for controlling an apparatus having at least a first rotatable component and a second rotatable component is provided. The method comprises determining, by a control system, a frequency of a motion of each of the rotatable components, wherein, e.g., at least one (or both) of the motions is (at least partially or at least predominantly) an axial motion of one of the rotatable components; and controlling, by the control system, rotation of at least one of the rotatable components depending on a ratio of the frequencies of the rotatable components.

A periodic motion of a rotatable component, e.g., a shaft, back and forth along its rotational axis can also interfere with other motions occurring in the apparatus. The functionality corresponds to that of the orbiting motion described above, so reference is made thereto. One of the frequencies may be the frequency of rotation (i.e., the rotational speed of one of the rotatable components. Further, one of the frequencies may be an orbiting frequency (i.e., the orbiting speed) of one of the rotatable components. Thus, as an example, the ratio may be calculated using an orbiting frequency of one rotatable component, and an axial-motion frequency of the other rotatable component.

According to an aspect, a control system for controlling an apparatus having at least a first rotatable component and a second rotatable component (that are, optionally, rotatable with a variable ratio of speeds) is provided. The control system is adapted to perform the method according to any aspect or embodiment described herein. Specifically, the control system is adapted to determine a (rotational or orbiting) speed of each of the rotatable components (e.g., shafts), wherein at least one of the speeds is an orbiting speed of an orbiting motion of one of the rotatable components; and control rotation of at least one of the rotatable components depending on a speed ratio of the speeds of the rotatable components.

The control system may further comprise a near-integer-speed-ratio detector for detecting a ratio of speeds at, near to (e.g., inside a predetermined interval around) and/or approaching (e.g. entering a predetermined interval around) an integer value. Optionally the control system further comprises a database storing a plurality of possible operational statuses of the apparatus and (appropriate) speeds of the shafts for each operational status, in particular having no substantially integer ratio. Notably, the engine status may be defined by a n-dimensional vector. For instance, for a hybrid-electric power plant, the n-dimensional status vector may include: shaft rotational speeds, torque levels, propeller pitch angles, propeller axis orientation, power levels, variable vane angles, Fuel specific consumption, temperatures, pressures, voltage levels, current levels battery levels, flight altitude, bank angles etc., such as:

$$\{\omega_1, \omega_2, \dots, Trq_{ij}, Prop_\emptyset, Prop\ \Gamma, PWR_j,\ NVG_\alpha, FSC, {}^\circ C_i, p_j, V_g, i_{a,j}, alt, \phi_z..\}_{time=t*}$$

According to an aspect, an apparatus is provided. The apparatus comprises at least two shafts and the control system according to any aspect or embodiment described herein. The apparatus may be or comprise an engine. The apparatus may be or comprise a gas turbine, in particular a gas turbine engine, particularly for an aircraft.

The apparatus may further comprise a first sensor for determining the rotational or orbiting speed of the first shaft and a second sensor for determining the rotational or orbiting speed of the second shaft. The orbit speed may be described by the orbit frequency. The orbit is defined by module, frequency and phase, e.g., measured by at least one vibration sensor (particularly, two vibration sensors, e.g., at 90 degree offset to each other), such as an accelerometer, a proximity probe, a blade tip timing system or alternatively (or in addition) by one or more sensors that use a voltage output due to airgap variation in one or more electrical machines or one or more electrical bearings. The sensors may be operatively connected to the control system to provide shaft speed measurements to the control system. When the apparatus is a gas turbine engine, it may comprise an engine core comprising a turbine, a compressor, and a core shaft connecting the turbine to the compressor; a fan located upstream of the engine core, the fan comprising a plurality of fan blades; and a gearbox that receives an input from the core shaft and outputs drive to the fan so as to drive the fan at a lower rotational speed than the core shaft. For such a gas turbine the control system may particularly strongly be reducing vibrations that can occur at resonances of the gearbox. It may be provided that the turbine is a first turbine, the compressor is a first compressor, and the core shaft is a first core shaft; the engine core further comprises a second turbine, a second compressor, and a second core shaft connecting the second turbine to the second compressor; and the second turbine, second compressor, and second core shaft are arranged to rotate at a higher rotational speed than the first core shaft. Optionally, the apparatus comprises at least one rotational speed sensor for each of the two rotatable components (e.g., shafts) to measure the rotational speed of each of the rotatable components (e.g., N1 and N2 of two shafts). The apparatus may further comprise at least one vibration sensor (or other sensor) for each of the two rotatable components. Using frequencies measured using these sensors, the control system determines the orbiting speed of one or both rotatable components (e.g., kN1 x N1 and kN2 x N2, wherein, particularly, kN1 and kN2 each have a value smaller or larger than 1) Alternatively, or in addition, the control system of the apparatus is adapted to determine one or both of the orbiting speeds based on a calculation and/or look-up table, e.g., using current operational conditions. Based on the orbiting speeds and the rotational speeds the control system determines a speed ratio target, particularly, a rotational speed ratio target (e.g., N2/N1). This target is provided to a speed controller (e.g., an engine speed controller) that controls the operation of the apparatus.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

Embodiments will now be described by way of example only, with reference to the Figures, in which:

| | |
|---|---|
| Figure 1 | is an aircraft having a plurality of gas turbine engines; |
| Figure 2 | is a sectional side view of a gas turbine engine; |
| Figure 3 | is a close up sectional side view of an upstream portion of a gas turbine engine; |
| Figure 4 | is a partially cut-away view of a gearbox for a gas turbine engine; |
| Figure 5 | is an apparatus having a control system and three shafts; |
| Figure 6 | shows shaft speed ratios of a gas turbine engine with three shafts versus time during an acceleration; |
| Figure 7 | shows the increase of vibrations in the region of integer shaft speed ratios of which at least one of the speeds is a speed of an orbit; |
| Figure 8 | shows a frequency spectrum of vibrations in a gas turbine engine versus time; |

| Figure 9 | shows an orbiting motion of a shaft of a gas turbine engine; |
|---|---|
| Figures 10A and 10B | show orbiting motions of a shaft of a gas turbine engine in accordance with elongate ellipses; |
| Figure 11A and 11B | show journal bearings controlled by a control system; |
| Figure 12 | is a diagram of frequencies, torques and vibration levels at a journal bearing versus time; |
| Figure 13 | is a diagram showing a level of vibration versus time, more specifically, a planet orbit magnitude trend during steady state conditions of both torque and speed; |
| Figures 14 and 15 | show how an orbit of a shaft can affect a gap; |
| Figure 16 | shows a turbine stage of the gas turbine engine and unbalanced tangential forces generated in a turbine because of a gap radial asymmetry that affects aerodynamic forces on blades, so that upper and bottom blade sectors are not equilibrated and a tangential force able to force the shaft to orbit is generated; |
| Figures 17 and 18 | show an electrical machine; |
| Figures 19A and 19B | show methods for controlling an apparatus having at least a first shaft and a second shaft; |
| Figures 20A and 20B | show diagrams for minimizing fuel consumption; |
| Figure 21 | shows a control system for controlling an apparatus having at least a first shaft and a second shaft; |
| Figure 22 | shows a system for controlling a displacement of a first component relative to a second component; and |
| Figure 23 | shows a series hybrid propulsion apparatus for an aircraft. |

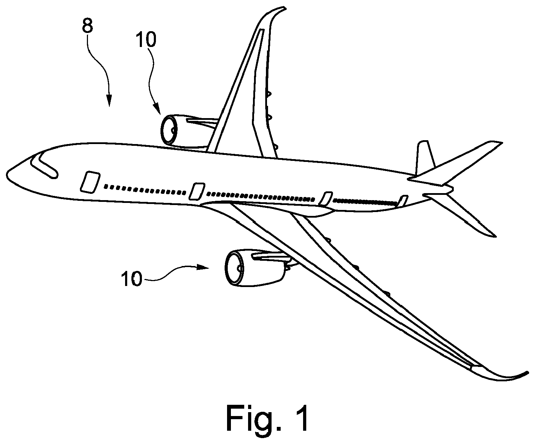

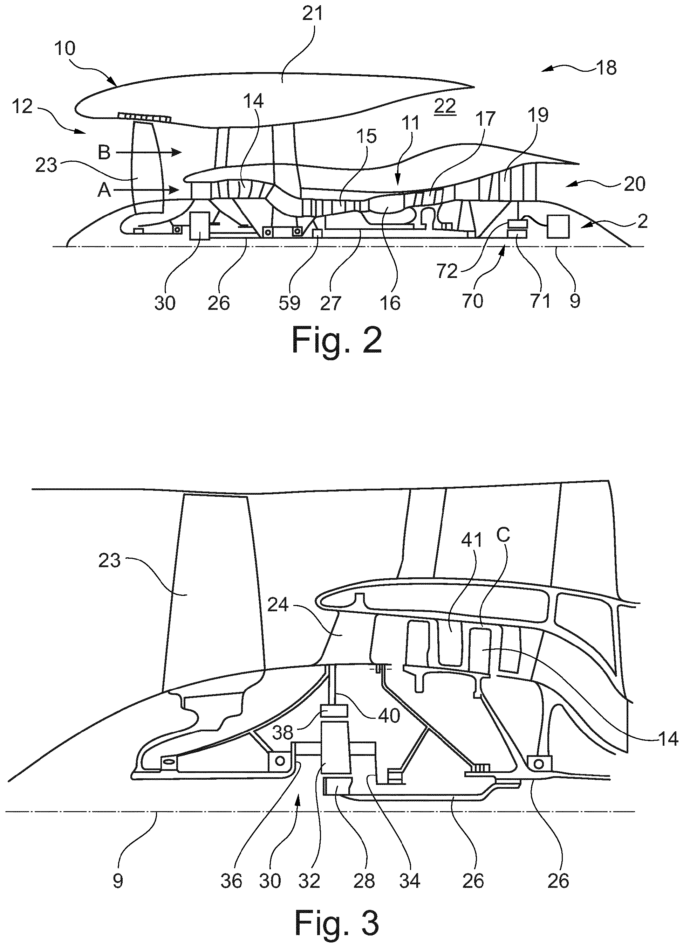

Figure 1 shows an aircraft 8 in the form of a passenger aircraft. Aircraft 8 comprises several (i.e., two) gas turbine engines 10 in accordance with Figures 2 and 3.

Figure 2 illustrates a gas turbine engine 10 having a principal rotational axis 9. The gas turbine engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18.

The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in Figure 3. The low pressure turbine 19 (see Figure 2) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

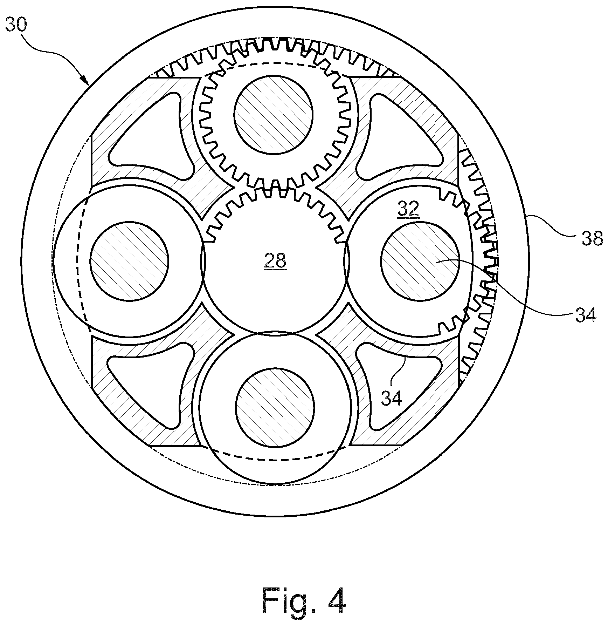

The epicyclic gearbox 30 is shown by way of example in greater detail in Figure 4. Each of the sun gear 28, planet gears 32 and ring gear 38 comprise teeth about their periphery to intermesh with the other gears. However, for clarity only exemplary portions of the teeth are illustrated in Figure 4. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 3 and 4 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 3 and 4 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 3 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 3. For example, where the gearbox 30 has a star arrangement (described above), the skilled person would readily understand that the arrangement of output and support linkages and bearing locations would typically be different to that shown by way of example in Figure 3.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 2 has a split flow nozzle 20, 22 meaning that the flow through the bypass duct 22 has its own nozzle that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 2), and a circumferential direction (perpendicular to the page in the Figure 2 view). The axial, radial and circumferential directions are mutually perpendicular.

As shown in Figure 2, the gas turbine engine 10 further comprises a control system 2. The gas turbine engine 10 further comprises a bearing 59. The gas turbine engine 10 further comprises (more generally: the apparatus may further comprise) an electrical machine 70. In the present example, the electrical machine 70 is an electric motor that can convert electrical energy into motion, alternatively, or in addition, it can be configured to be used as a generator to convert motion into electrical energy. The electrical machine 70 comprises a stator 72 being fixed with respect to the nacelle 21, and a rotor 71. The rotor 71 is rotatable with respect to the stator 72. The rotor 72 is fixed to the shaft 26. Thus, the electrical machine 70 can drive (and be driven by) the low-pressure compressor 14 and the fan 23. It is worth noting that the electrical machine 70 could alternatively be operatively connected to the interconnecting shaft 27 or, e.g., any other shaft of the core engine. Stated more generally, the electrical machine 70 is arranged to drive and/or to be driven by other parts of the apparatus.

Further, the electrical machine 70 is adapted to provide signals indicative for a motion (particularly, in the radial direction, e.g., due to the stiffness in one direction, e.g., Z, being larger than the stiffness in another direction, e.g., Y) and/or a force and/or a torque between the rotor 71 and the stator 72.

The control system 2 is adapted to receive the signals from the electrical machine 70 and, optionally, one or more vibration sensors and/or speed sensors. There can be one or more electrical machine(s) and/or one or more magnetic bearing(s) distributed in series or parallel connection to one or more of the shafts 26, 27.

The control system 2 is adapted to determine a speed of each of the shafts 26, 27, wherein at least one of the speeds is an orbiting speed of an orbiting motion of one of the shafts 26, 27 around its nominal rotational axis 9.

For this purpose, the control system 2 is adapted to determine an orbiting speed of an orbiting motion of the shaft 26 using the signals received from the electrical machine 70 (alternatively, or in addition, from a vibration sensor and/or another sensor). The control system 2 comprises a frequency analyzer adapted to calculate the orbit frequency (also indicated as orbit speed) from measurements of the sensor(s). Alternatively, or in addition, the control system may receive the orbiting speed as an input and/or determine the orbiting speed from a look-up table. The look-up table may store orbiting speeds of one or more shafts 26, 27 for various operating conditions (e.g., rotational speed, torque and/or temperature or the like).

Further, the control system 2 is adapted to control rotation of at least one of the shafts 26, 27 depending on a speed ratio R of the speeds of the shafts 26, 27.

This may be performed so as to restrict the speed ratio R of speeds of the shafts 26, 27 to predetermined values and, in particular, so as to avoid integer speed ratios R. Here, the integer avoidance is imposed on ratios between shaft rotational speed and at least one orbit speed, or between two orbit speeds. Optionally, both speeds of the shafts 26, 27 used for the speed ratio R are orbiting speeds. A rotational speed may be determined by the control system 2 using a speed sensor. The speed sensor signals are available to the control system 2, because commonly the control system 2 commands the shaft speed ratios as target values, but not directly the orbit. When the orbit speed is expressed by a variable coefficient multiplied by the shaft rotational speed, then the control system 2 can mistune the shaft speed ratio as required to avoid integer ratios that involve (an) orbit speed(s).

Thus, the control system 2 allows to avoid potentially resonant cross-excitations between the orbiting motion of one shaft and the rotational motion or orbiting motion of another shaft (or other shafts). This allows to strongly reduce vibrations in the machine.

The control system 2 also allows an early detection of an engine alignment degradation by monitoring gap-dependent vibration and unbalanced magnetic forces in the electrical machine, e.g., electrical drive. In particular in aircraft engines, a deterioration of the initial alignment of rotors, for instance caused by changes in radial and axial clearances or in angular misalignments between rotors and between rotors and stators (e.g., fixed relative to the nacelle 21) is known to drive vibrations.

In particular, gap-dependent forces are developed when the gaps between rotors and stators loose the circumferential symmetry and as a result of this, an unbalanced air pressure, oil pressure or magnetic flux exert a resultant force onto the rotors that may cause vibrations and instable orbits in turbines, compressors, oil seals, oil bearings, squeeze film dampers and electrical drives (e.g., Alford forces in turbines, Wachel forces in compressors, oil whirl and whip in journal bearings, unbalanced magnetic pull in electrical drives).

Since vibrations generated by the gap-dependent forces appear particularly in frequency ranges that are known and/or can be determined by a measurement, calculation and/or a simulation, and present a high sensitivity to small changes in the rotor alignment, they are good early indicators of loss of alignment and mechanical deterioration, such as an unwanted increase of clearances. Given a certain tip clearance (for turbines and compressors), rotor shaft and housing design, the gap-dependent vibrations appear in frequency ranges that are known or can be determined. Therefore, to detect and monitor frequency and magnitude trends in the gap-dependent vibration that appear as rotor orbits superimposed to the rotor spin represent a good early indicator of a deterioration that causes a loss of rotor alignment in rotating machinery, in particular in an aircraft engine.

While it is possible to use signals of dedicated vibration sensors for the analysis of the control system 2, e.g., of accelerometers, it is particularly helpful to use signals from an electrical machine in the driveline, e.g., the electrical machine 70, to provide the signals for the analysis. When an electrical machine, e.g., drive, is connected to the rotatable component(s), unbalanced magnetic forces may be induced into the electrical drive as a consequence of asymmetrical gap-dependent forces being generated on the other engine rotatable component(s) because of a loss of alignment somewhere in the driveline. In electrical machines, such asymmetrical gap-dependent orbits and vibrations may be isolated and amplified by dedicated electrical circuits and coils, so that that the electrical machine may work as a vibration sensor highly sensitive to the gap-dependent orbits and vibrations of the other rotatable components. The control system 2 may track frequencies, amplitudes and phases of the gap-dependent vibration in electrical or hybrid engines, and in auxiliary power units (APUs) using the capacity of the electrical machine to separate and amplify the movements between rotatable components and the corresponding other components generated by gap-dependent forces acting on the engine driveline.

A further option is to use the electrical machine 70 as a vibration controller. The gap-dependent vibrations of components other than the electrical machine 70 may be actively counteracted by means of the electrical machine 70. To this end, the control system 2 may provide control signals to the electrical machine 70, e.g., to provide voltages and/or currents to the coils based on the control signals. The control signals may be based on the speed ratio of the speeds of the shafts. Alternatively, or in addition, one or more signals can be sent to the engine controller to actuate other regulations to minimize vibration and/or restore performance levels to nominal (e.g., restore turbine or compressor efficiency changing the operational point) for controlling, by the control system 2, rotation of at least one of the shafts 26, 27 depending on the speed ratio R of the speeds of the shafts 26, 27.

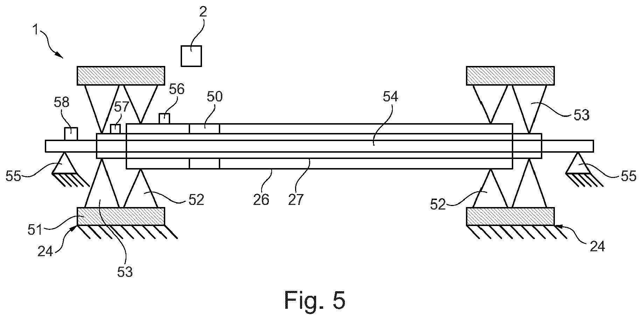

Figure 5 schematically shows an apparatus 1 comprising three shafts 26, 27, 54 and a control system 2 for controlling the apparatus 1. For example, the control system 2 may be the same as described with reference to Figures 2 and 3.

The apparatus 1 comprises a stationary support structure 24 which supports a plurality of bearings 52, 53, 55.

Each one of the shafts 26, 27, 54 is rotatably supported on the stationary support structure 24 by means of (a pair of) bearings 52, 53, 55. Optional damping 51 (e.g. including an oil-film damper) may be interposed between the stationary support structure 24 and one or more bearings 52, 53. An optional intershaft bearing 50 supports one shaft on another.

In the present example the shafts 26, 27, 54 are coaxially arranged and rotatable around the same axis of rotation. An outer shaft 26 surrounds an intermediate shaft 27 and an inner shaft 54. The intermediate shaft 27 surrounds the inner shaft 54.

A speed sensor 56-58 for each of the shafts 26, 27, 54 measures the rotational speed of the respective shaft 26, 27, 54 with respect to the stationary support structure 24. The speed sensors 56-58 are communicatively coupled to the control system 2.

To reduce vibrations in the apparatus 1, the control system 2 is adapted to control rotation of at least one of the shafts 26, 27, 54, in particular all of the shafts 26, 27, 54, depending on one or more speed ratios of the rotational speeds of the shafts 26, 27, 54, wherein at least one of the speeds (of the speed ratio or each speed ratio) is an orbiting speed of an orbiting motion of one of the shafts 26, 27, 54 around a nominal rotational axis (the axis of rotation of the respective shaft when rotating without orbiting motion; the nominal rotational axis has a fixed orientation with respect to the stationary support structure 24) thereof. The control system 2, which may act as a speed controller, may mistune also conditions when one or more shaft speeds happens to be an integer multiple of an axial bouncing.

The control system 2 receives speed sensor 56-58 readings and determines ratios of the shaft speeds. In case that a pair of shafts 26, 27, 54 has a speed ratio that is close to or approaching (e.g., inside or entering a predefined interval around) an integer value, the control system 2 reacts by controlling rotation of one or more, e.g. all of the shafts 26, 27, 54 to change the respective shaft speed, so that the corresponding speed ratio is again far enough (e.g., outside the interval) from the integer value. The control system 2 particularly monitors integer values of 2, 3, 4, 5, 6 or greater.

Thus, the control system 2 is adapted to control rotation of the shafts 26, 27, 54 depending on speed ratios. In particular it is adapted to restrict the rotation of the shafts 26, 27, 54 to predetermined speed ratios.

The control system 2 may be adapted to avoid some or all possible integer shaft speed ratios, optionally for all shaft (rotational and/or orbiting) speed ranges, or for a subset of shaft speed ranges.

By avoiding integer shaft speed ratios by means of the control system 2 at least in some situations and/or at least in specific shaft speed ranges, vibrations may be significantly reduced.

The apparatus 1 may be used in a gas turbine engine, in particular it may form a part of a gas turbine engine. The gas turbine engine may be a three-shaft engine. Each of the shafts 26, 27, 54 may be driven by a turbine stage, and drive a compressor stage and/or a fan. The outer shaft 26 may also be referred to as N1 shaft, the intermediate shaft 27 may be referred to as N2 shaft and the inner shaft 54 may be referred to as N3 shaft. One of the shafts 26, 27, 54 may be referred to as a first shaft, another one as a second shaft.

The control system 2 may serve as an engine speed controller.

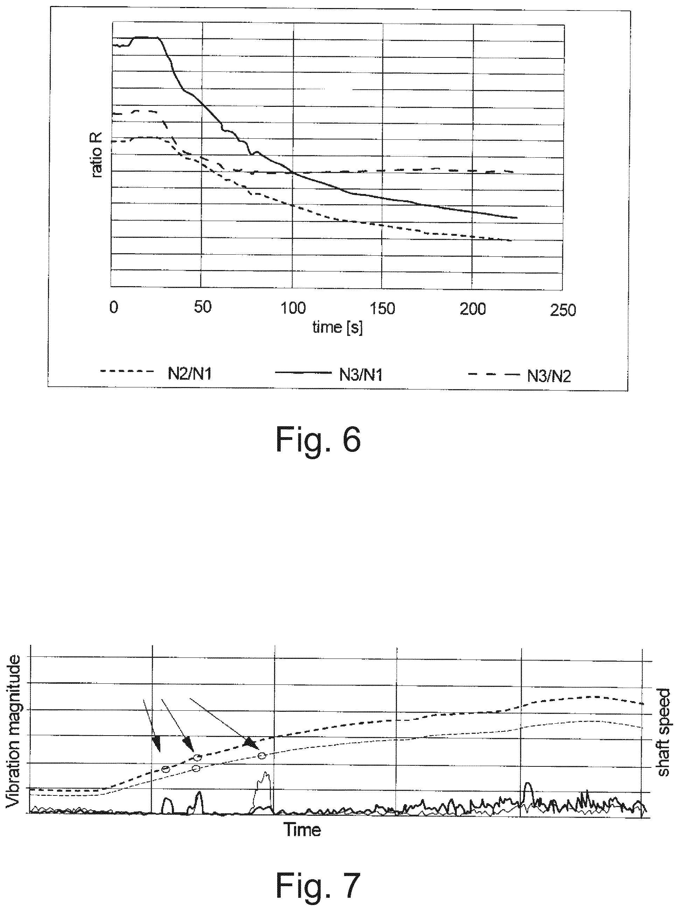

Figure 6 shows shaft rotational speed ratios R versus time of an apparatus (e.g., apparatus 1 of Figure 5), e.g., an aircraft gas turbine engine, with three shafts, herein denoted as N1-N3, during an acceleration of the engine. The three different curves show the rotational speed ratios of the three combinations of the shafts N1-N3. The curve N3/N2 is shown at a different scale than the other two curves. From Figure 6 it becomes apparent that the shaft rotational speed ratios R may substantially change during operation of the gas turbine engine. A similar change of the rotational speed ratio of the two shafts 26, 27 of gas turbine engine 10 according to Figures 2 and 3 can be seen in operation.

Figure 7 shows in thick and thin lines and versus time shaft speeds (dashed lines) and vibration magnitudes (solid lines) of two shafts of a gas turbine engine as an example for any kind of a machinery having two or more shafts that are rotatable at variable speed ratios.

Imbalances of the shafts and/or other components may lead to vibrations of the shafts. Then, one of the shafts may excite a vibration of another one of the shafts. This occurs particularly in dependence on the ratio of the rotational speeds of the shafts.

Arrows in Figure 7 point at several occurrences of integer shaft rotational speed ratios. It becomes clear from Figure 7 that at these points in time, the vibration magnitude at the two different shafts are strongly increased with respect to neighboring points in time where the shaft rotational speed ratios R are far enough from an integer.

It is also worth noting that integer shaft rotational speed ratios, in other words, one shaft rotating at a speed being a multiple of the speed of another shaft, are particularly prone to generate low-frequency vibrations that may generate amplitude modulations on measured engine parameters, such as speeds, vibration, air, oil and fuel intake, variable nozzle geometry, variable vane geometry, propeller or rotor pitch angle, cooling valves, torque, thrust etc., in the form of beatings. Beatings are known to be potentially detrimental when they enter an engine control loop and can be amplified by an actuation system in the attempt to minimize the error. Low frequency vibration cycles can generate a low cycle fatigue life consumption that needs to be taken into account to ensure engine structural integrity. This is addressed by control systems and methods described below.

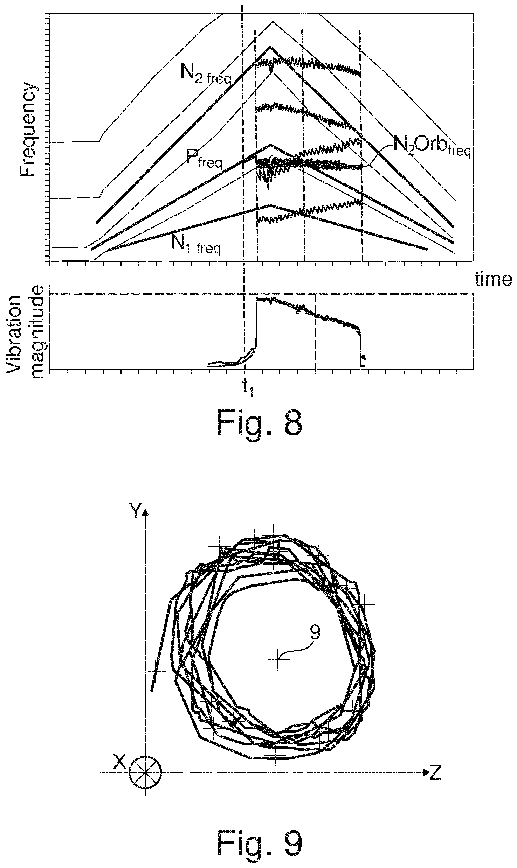

Figure 8 shows in the upper diagram the amplitude of a range of frequencies versus time in the gas turbine engine 10 according to Figures 2 and 3 during an acceleration and a deceleration of the gas turbine engine 10. Lines are drawn to guide the eye for the contribution of various rotatable components. Here, N1freq denotes the rotational speed of the shaft connecting the planet carrier 34 with the fan 23 and N2freq denotes the rotational speed of the shaft 26 (which in this example is the intermediate-pressure shaft). Pfreq denotes a rotational speed of each of the planet gears 32 (further rotatable components) about their respective own axis (as seen from a fixed observer). Further, N2Orbfreq denotes the orbiting speed of the shaft 26. It becomes apparent that during acceleration, the frequencies corresponding to said rotational speeds increase proportionally. At a certain point in time, a backward orbiting motion (here, a sub-synchronous orbit) of the shaft 26 is excited. This leads to a strong contribution of N2Orbfreq to the overall vibrations. Especially in planetary gearboxes, therefore with a still ring gear, an orbit of the carrier and/or of the sun shaft can generate high vibration at the ring gear mounting and consequently at the engine mount. After the orbiting motion has been excited, the engine is decelerated, as can be seen in the proportional decrease of the lines N2freq, Pfreq and N1freq. however, the orbiting motion of shaft 26 continues at almost constant frequency. This happens due to the oil-whirl phenomenon, which is a type of instability in journal bearings, generated when the oil film has gained so much kinetic energy, for instance because of a whirl or torsional resonance, that it continues to push the rotor in an orbit at a constant frequency even when the shaft speed is reduced.

The lower diagram in Figure 8 shows the vibration magnitude of the orbiting motion. At time t1 it starts to be excited and builds up (very quickly) until the next vertical dashed line indicating the onset of a stable orbiting motion. With decreasing rotational speeds the magnitude of the orbiting motion decreases. Only after the rotational speeds have been reduced to a certain value below the value at time t1, the orbiting motion ceases (last vertical dashed line).

Notably, at the onset of the orbiting motion the orbiting speed and the planet gear speed is almost identical. That is, the speed ratio of the orbiting speed and the planet gear speed is approximately 1, i.e., an integer. Similar excitations of orbiting motions can be seen at higher integer ratios (e.g., 2, 3 or higher) and for the other shafts and rotatable components. In this case these periodicities can depend on the gear train number of teeth.

By avoiding certain speed ratios, wherein at least one of the speeds in the ratio is an orbiting speed, strong contributions to the overall vibration can be obtained. Further, other counter-measures are possible, e.g., a change of an oil temperature and/or pressure to change the viscosity of a bearing of the respective orbiting shaft and/or to change a magnetic force exerted thereon by a magnetic bearing and/or the electrical machine 70.

This behavior can be seen also in other machines where two shafts are coupled with one another via a gearbox.

Figure 9 shows, for illustration, a possible orbiting motion of the shaft 26 center around its nominal rotational axis 9 while rotating around its center. The orbiting motion is a precession around the nominal rotational axis 9. An axial movement can also be present.

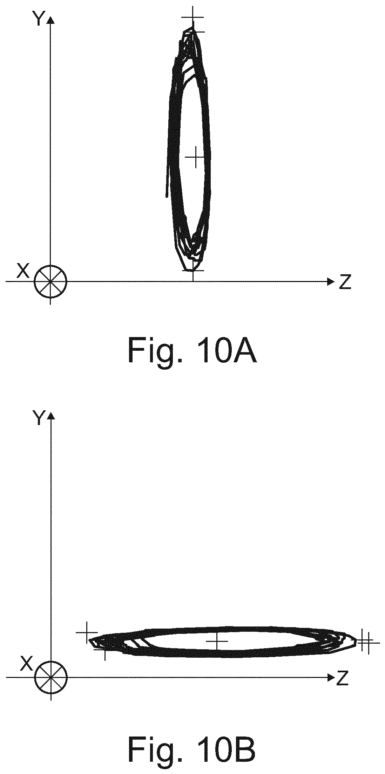

Figures 10A and 10B show, for illustration, other possible orbiting motions of the shaft 26. It can be seen that an orbit may be exited predominantly in one direction (leading to an almost lateral vibration). That is, the motion of the shaft 26 center around its nominal rotational axis 9 may be elliptical (describing an elongate ellipse).

Such motions may be detected and counteracted by means of asymmetric magnetic forces (e.g., using electrical machine 70 and/or a magnetic bearing).

An orbiting motion as shown in Figure 10A can be the result of the stiffness in direction Z being larger than the stiffness in direction Y. An orbiting motion as shown in Figure 10B can be the result of due to the stiffness in direction Y being larger than the stiffness in direction Z. Displacements in X direction can be present and accounted for when defining the position of the center of the shaft at several stations.

It is worth noting that an orbiting rotatable component (e.g., shaft) may also be moved axially.

Correspondingly, also other elements in gas turbine engines and more generally, in rotating machinery can exhibit similar effects, for example squeeze film dampers, as will be described in more detail below. Also between the blade tips of the low-pressure compressor 14 (and correspondingly for other stages) and the surrounding casing of the nacelle 21 there is a clearance C, see Figure 3. This clearance is also filled with a fluid, in this case air. Also, the air in the clearance C at the blade tips may become unstable in certain operating conditions what can result in gap-dependent forces. These forces often have the final effect to produce orbits that move the center of the centerline. It is worth mentioning that, even though the orbits are developed as radial and tangential motions in the traversal plan that contains the section of the rotor, also axial displacements can appear at the same time, producing a trajectory for the centerline of the rotors that may resemble an helicoidal shaped curve. Especially in geared turbofans, in turboprops and in the type of electrical machines that are particularly sensitive to axial gap variations, such as distributed winding machines and permanent magnet machines, that effect of axial relative displacements may be kept into account.

These forces are often referred to as Wachel forces in compressors. Similarly, corresponding forces are referred to as Alford forces in the case of turbines. This will be described further below in an example of a turbine stage.

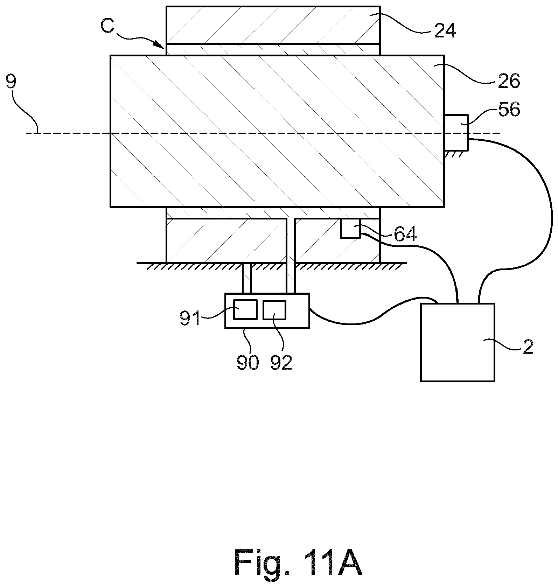

Figure 11A shows a system of the apparatus (e.g., apparatus 1 or gas turbine engine 10 described above) with a journal bearing. The journal bearing comprises a bearing component, here as an example a part of the stationary support structure 24, and a rotatable component, here as an example shaft 26, arranged so as to be rotatable about rotational axis 9 relative to the stationary support structure 24. The bearing component forms a receptacle in which the rotatable component is rotatably accommodated. While in this example the bearing component surrounds the rotatable component, however, in other examples the configuration is vice versa and the rotatable component surrounds the bearing component.

Between the rotatable component and the bearing component there is a clearance C. In other words, the inner diameter of the bearing component receptacle is larger than the outer diameter of the rotatable component in the region of engagement. The clearance C is filled up with a fluid. The fluid acts a lubricant. In the present example, the fluid is an oil.

An oil system 90 supplies the oil to the journal bearing. The oil system 90 comprises an oil tank and an oil pump, or is connected to an oil tank and/or an oil pump. The oil system 90 is generally adapted to adjust at least one property of the oil in the clearance C, in particular the pressure and, optionally, the temperature of the oil in the clearance C. For example, in a general case, the control system 2 ensures that a certain pressure is obtained at one or more feed pockets of the journal bearing, the feed pockets being small cavities that allow the oil to enter and keep pressurize the gap C. It is worth noting that even though the gap C is defined by design via the clearances, it may variate during operations, e.g., due to an orbit in the journal or a radial and axial relative displacement between journal and bearing component that constitutes the clearance C gap (e.g., a planet gear).

In the example shown in Figure 11A, at least one valve, more precisely, a servo valve 92, is adjustable to control the pressure of the oil in the clearance C, but also other means are conceivable for this purpose. For instance, the oil film feed pressure can be controlled at the oil pump or at an oil transfer coupling that are both static locations on the engine. The oil system 90 of the example shown in Figure 11A further comprises an (optional) oil cooler 91 which is adjustable to control the temperature of the oil in the clearance C.

The system further comprises a speed sensor 56 as a means to determine the rotational speed of the rotatable component relative to the bearing component, and at least one vibration sensor 64 to measure a vibration of the rotatable component. The at least one vibration sensor 64 may be or comprise, e.g., at least one proximity sensor. The vibration (e.g., of an orbiting motion) of the rotatable component can be measured by one or more sensor(s) grounded (mounted on a fixed frame) or by one or more sensors rotating with the rotatable component (e.g., via a telemetry system). Alternatively or in addition, the at least one vibration sensor 64 may be or comprise at least one accelerometer. The one or more accelerometers may, e.g., be mounted on the bearing component. The system may further comprise at least one phase measuring sensor (e.g., sensor 64 may be configured accordingly), oil feed pressure determining means (performing a measurement and/or calculating by means of a look up table) and/or at least one device for measuring an oil temperature, engine speed, torque and/or power (or for determining it, e.g., form an engine FADEC).

It is worth noting that the oil feed pressure can be measured in a location that may be far away from the journal bearing feed pockets (e.g., at the oil transfer coupling which is on a static engine part) and, based on this controlled pressure, the values expected at the journal bearing feed pockets and in the clearance C gap can then be obtained by calculations.

Furthermore, the system comprises the control system 2. The control system 2 is coupled to the speed sensor 56 and the at least one vibration sensor 64 so as to receive sensor signals therefrom. The control system 2 is adapted to determine whether or not the vibration of the rotatable component, measured by means of the at least one vibration sensor 64, comprises a frequency that is synchronous with the rotational speed, or near-synchronous within one or more predefined ranges of frequencies adjacent synchronicity with the rotational speed of the rotatable component relative to the bearing component, e.g., equal to or smaller than 0.5 (or smaller than or equal to 1.0) times the rotational speed in Hz. Fixed-axis journal bearings usually have orbits minor than 0.5 times the journal frequency. Then in case of a high-speed instability the oil whirl frequency can arrive up to the journal frequency (which would mean that the oil film is rotating almost at the same tangential speed of the shaft, which can reduce the performance of the journal bearing giving out onsets of oil starvation. In a planet journal bearing the oil film average kinetic energy (therefore its average speed) is commonly affected by the oil film characteristics such as oil temperature, pressure, viscosity, kinematic viscosity, inner and outer Reynolds numbers, density as well as by the planet and carrier rotational speed and speed ratio. The way in which the oil film kinetic energy is built up depends on oil property, clearances in operations (e.g., that may variate with torque) and with the speed(s). In particular, the control system 2 may be adapted to perform a Fourier analysis (in particular an FFT analysis) to determine the frequency of the vibration; however, this analysis may alternatively be performed externally from the control system 2. In the latter case the control system 2 may receive as an input one or more analog or digital signals (e.g., indicative for one or more of the parameters for the oil film characteristics listed above).

The control system 2 is adapted so as to determine a speed of each of two rotatable components, wherein at least one of the speeds is an orbiting speed of an orbiting motion of one of the rotatable components around the nominal rotational axis 9 thereof; and control rotation of at least one of the rotatable components, in this example shaft 26, depending on the speed ratio R of the speeds of the rotatable components. In order to control rotation of shaft 26, the control system 2 adjusts a pressure set point and/or a temperature set point for the fluid in the clearance C.

Depending on control signals of the control system 2, e.g., the oil system 90 may reduce the oil pressure and, optionally, increase the oil temperature. This change of the oil pressure (optionally, also of the temperature) is performed in predefined discrete steps. After performing a change by a predefined discrete step, the control system 2 may be adapted to monitor the effect of the change on the oil stability. Optionally, the control system 2 is adapted to wait for a predefined time before providing another control signal to make another change.

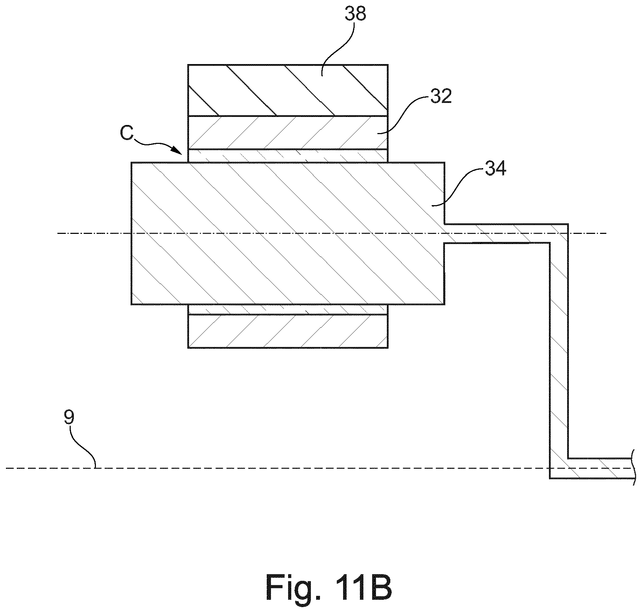

Figure 11B shows another configuration of a journal bearing of the gas turbine engine 10. According to Figure 11B, a pin of the planet carrier 34 is inserted in a receptacle of a rotatable component, here a planet gear 32. The ring gear 38 extends coaxially around a central axis 9. Using sensors, a rotational speed and or an orbiting speed of the planet gear 32 may be determined by the control system 2. Optionally, also carrier 34 orbits and sun gear 28 shaft orbits are detected by the control system 2, because they may be generated by the gap-dependent forces due to the oil film and in turn may variate the clearances of the journal.

In general, when a rotor is rotated about its rotational axis and experiences a radial load, an oil film in a clearance exerts a hydrodynamic pressure on the sliding surface of the rotor, and the rotor is forced into an eccentric arrangement relative to its carrier. A location of maximum pressure follows the location of the minimum oil film thickness. The minimum oil film thickness hmin is calculated by means of the nominal width C of the clearance and the eccentricity $\varepsilon$ as hmin = $C(1- \varepsilon)$. At each angle $\theta$ with respect to the angle of the eccentricity $\varepsilon$ around the rotational axis, the oil film thickness can generally be calculated as $h(\theta) = C(1 + \varepsilon \cdot \cos\theta)$.

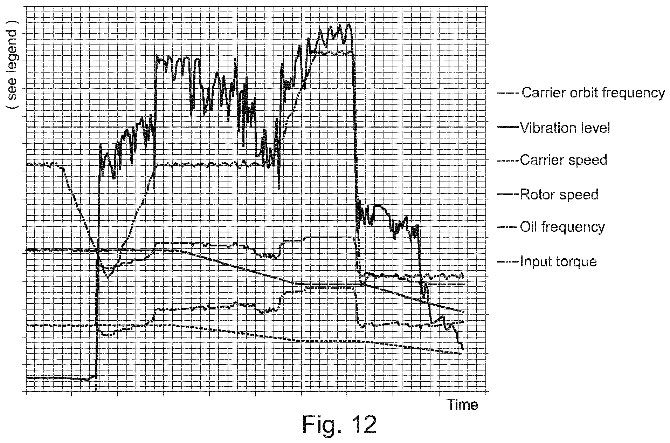

Figure 12 shows, versus time on the x-axis, vibrational frequencies and rotational speeds (both in Hz), as well as the level of vibration (in this case due to carrier orbits onto the ring gear) and applied torque at the journal bearing of Figure 11B. The different curves are overlaid, so the y-axis shows, in arbitrary units, the corresponding values. In particular, Figure 12 shows a variable frequency of a carrier forward precession, or forward orbit, induced by gap-dependent forces in the journal bearing. The carrier frequency orbit is limited by the maximum speed that can modulate the oil film in the journal which is the journal absolute speed itself (planet speed). Being due to a gap dependent forcing, the frequency of the orbit can vary.

The curve denoted as "carrier orbit frequency" shows the oil-film induced vibration as seen by a fixed observer. Correspondingly, the curve denoted as "oil frequency" shows the same vibration, but as seen in a frame rotating with the carrier (planet carrier 34, e.g., as measured by a rotating gauge on the carrier pin). The curve "vibration level" shows the amplitude of this vibration as measured.

The curve "carrier speed" shows the rotational speed of the carrier (with respect to a fixed frame). The curve "rotor speed" shows the rotational speed of the rotor (planet gear 32) (with respect to the fixed frame). It is worth noting that in the case of a journal bearing having a fixed carrier, e.g., the journal bearing of Figure 11A, the curve "carrier speed" would be at zero. In this case the journal bearing would have the journal at the outer race and the static part in the center.

The overlaid curve "input torque" shows the torque that is applied to the journal bearing.

At the left of Figure 12, at a certain point in time, carrier and oil frequencies suddenly increase, and at the same time the vibration level strongly increases. This point in time indicates the onset of oil-induced vibrations. In this case, the oil-film induced vibration is due to modulations induced onto the oil firm due to pin-planet and pin-carrier movements. It can be further seen that the vibration level is correlated with the input torque (see time spans with roughly constant speeds) and is correlated with the speeds (see time spans with roughly constant torque). Correspondingly, a possibility to reduce the vibration level, by the control system 2 (e.g., in the step of controlling rotation of at least one of the rotatable components depending on a speed ratio of the speeds of the rotatable components), is to reduce torque and/or speed, however, in many use cases, such as in gas turbine engines, it can be desirable not to change these parameters, because reducing speed and/or torque has a direct effect on the propulsion. Figure 12 also shows a correlation between the carrier and oil frequencies and the vibration level. The control system 2 and method described herein allow to maintain speed and torque (or change those parameters only by a smaller amount) by changing oil temperature and/or pressure in dependence of the vibration signal and/or speed ratio R.

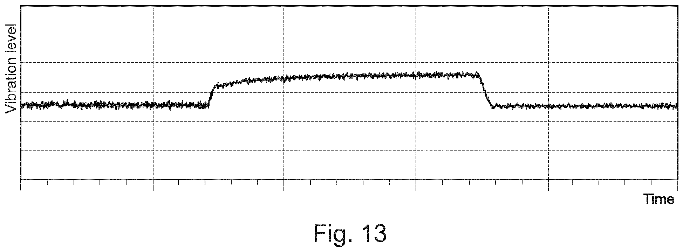

Figure 13 shows an example of a measured vibration level versus time. The vibration here is due to one or more planet orbits as seen at the ring gear. The oil film is in a highly instable condition, because any further, even small, change in the clearances and/or oil film characteristics may start to disrupt the oil film, pressurizing it even further. An attempt from reactive dynamic oil forces to enlarge the gap and release pressure could fail and lead to an onset of oil starvation. The control system 2 and method described in here allows to avoid such situations.

Starting from the left, the vibration level first was approximately constant, with constant speed and torque, and thus power. At a certain point in time, the power was increased, leading to an increased vibration level. After that, even though speed and power were maintained constant, the vibration level at the journal rotor frequency exhibited a trend and increased further, i.e., the vibration built up due to synchronous oil whirl or whip. At a later point in time, the control system 2 provided a control signal to decrease the oil pressure, and this led to a decrease of the vibration level to approximately the value at the left part of the diagram.

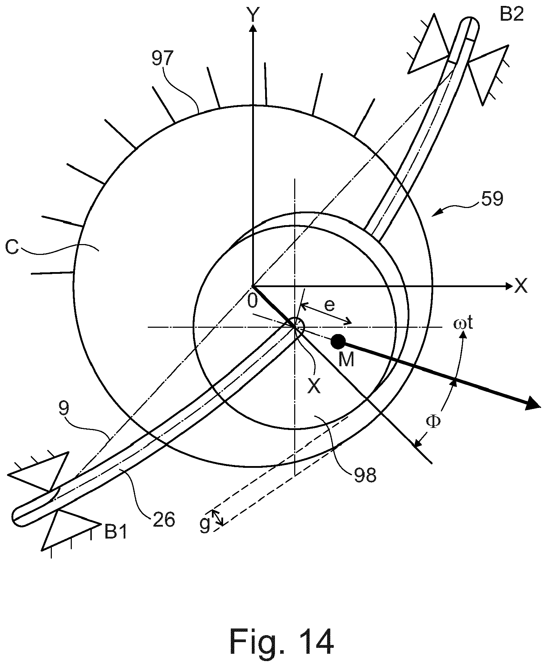

Figure 14 shows the bearing 59 (optionally a squeeze film damper constructed similarly, squeeze film dampers are lubricated elements providing viscous damping in mechanical systems). Here, the bearing 59 is mounted at the shaft 26 of the gas turbine engine 10, as one of many possible applications. The shaft 26 is rotatably mounted at bearings, wherein Figure 14 schematically shows two bearings B1, B2 by way of example. The bearing 59 is arranged between the bearings B1, B2, as an example. In the figure, the bearing 59 is shown enlarged for illustration.

The bearing 59 comprises a housing 97 and a rotor 98. The housing 97 is fixed, e.g., with respect to the nacelle 21. The rotor 98 is rotatably arranged in the housing 97 and has a geometrical center X. The housing 57 is aligned with the nominal axis of rotation 9 of the shaft 26 which in the present example is the principal rotational axis 9. This is indicated in Figure 14 with the origin 0 of coordinates x, y, which is the location of the center of the housing 97. In a balanced, symmetric state the shaft 26 is aligned with the principle rotational axis 9 (and extends through the origin 0), however, due to asymmetric forces, the shaft 26 may be bent, as shown in an exaggerated manner in Figure 14. Thus, center X of rotor 98 is displaced from origin 0 (while in a balanced state, center X of rotor 98 would be at the origin 0. Thus, the clearance C around the rotor 98 between the outer surface of the rotor 98 and the inner surface of the housing 97 is no longer symmetric, but asymmetric. A smallest gap g having the minimal width is indicated in Figure 14. The asymmetric gap width may lead to strong vibrations, e.g., by generating fluid (e.g., oil) film whirl or whip.

There are different possible reasons that may lead to an asymmetric arrangement of the rotor 98, one of which being a center of gravity M of the rotor 98 (and/or of the shaft 26) which is radially offset from the geometric center X. In Figure 14 this is indicated by an eccentricity e of the rotor 98 center of gravity M. A rotation (with speed ω) of the rotor 98 in the housing 97 leads to a centrifugal force indicated with an arrow in Figure 14 and being oriented at an angle Φ relative to the smallest gap g location with respect to the geometric center X. Other possible reasons are vibrations from other components acting on the bearing 59, a tilting of the shaft 26, and so forth.

It is worth noting that the shaft 26 (and a rotatable component in general) can orbit in a deformed manner as in Figure 14, or by making precession conical motions (stiff, e.g., with no or no substantial deformation), just in the bearings clearances.

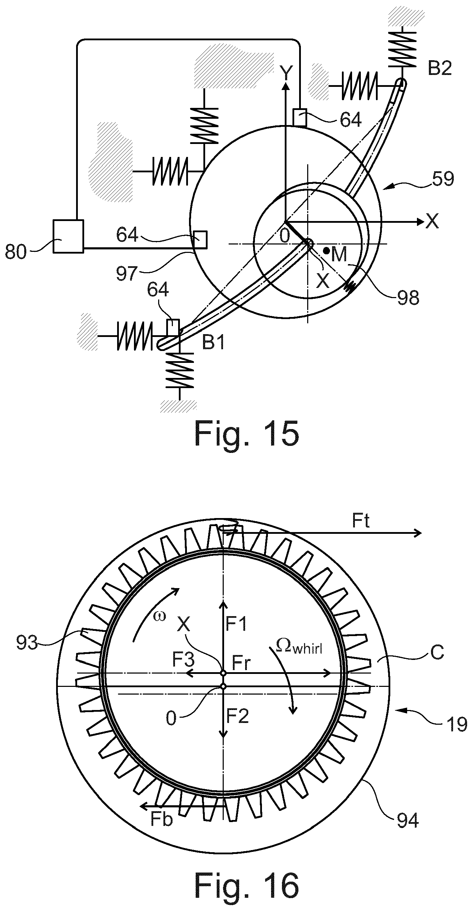

Figure 15 shows the bearing 59 of Figure 14, wherein springs are drawn for illustration to show that the bearings B1, B2, the mounting of the housing 97 and the oil film have elastic properties that influence the dynamic behavior of the bearing 59. Measurements and/or simulations may be performed to determine the dynamic behavior (e.g., the frequency spectrum, in particular at various different rotational speeds) of the bearing 59. The results thereof may be used to determine baseline thresholds for comparison in a later monitoring of the bearing 59 in use.

Further, Figure 15 shows possible arrangements of vibration sensors 64. A vibration sensor 64 may be mounted on the inner side of the housing 97 and/or a vibration sensor 64 may be mounted on the outer side of the housing 97 and/or a vibration sensor 64 may be mounted at a bearing B1, B2. The sensor 64 or the sensors 64 is/are connected to the control system 2 such that the control system 2 may receive signals therefrom.

Figure 16 illustrates a turbine stage of the low-pressure turbine 19 having a plurality of blades 93. The blades 93 have outer tips and are surrounded by a casing 94 (fixed to the nacelle 21). Between the blade 93 tips and the casing 94 there is a clearance C. However, due to imbalances, e.g., an eccentricity of the shaft 26 or turbine 19 mass from the geometric center X, or other sources of imbalances, the geometric center X of the turbine stage is offset from the origin 0 which is the geometric center of the casing 94. Thus, the blade 93 tip clearance C is unequal for the different blades 94.

However, blades 94 with a smaller tip clearance C are more efficient than those with a large clearance C. Thus, more work is extracted by the blades 93 with smaller tip clearance C, and a larger force Ft acts on the blades 93 with a smaller tip clearance C, while a smaller force Fb acts on the blades 93 with a larger tip clearance C. The resultant side force Fr, which is called the Alford force, drives the turbine stage (more generally: the rotor) in the direction of rotation what may lead to whirling. Without sufficient damping, such forces could amplify the displacement of the shaft 26.

Figure 16 further depicts as F1 the centrifugal force acting on the turbine stage, as F2 the elastic restoring force and as F3 an external damping force.

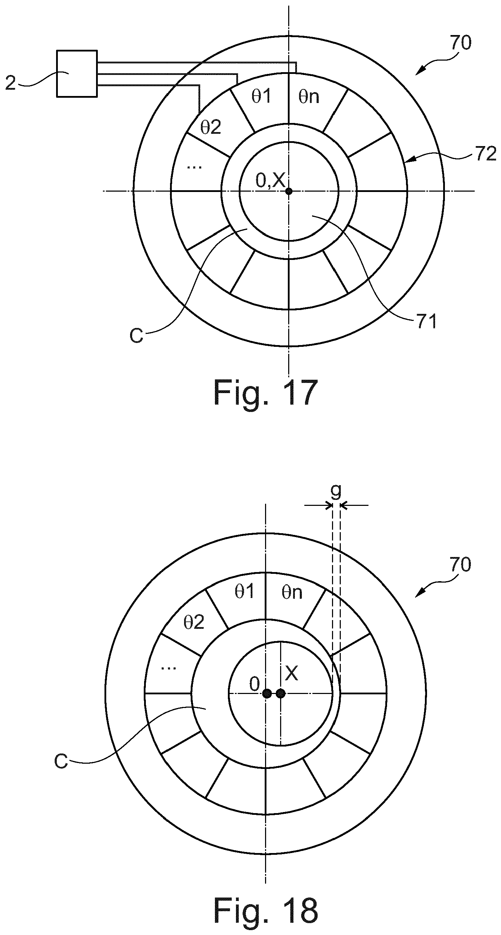

Figures 17 and 18 show the electric machine 70 with the stator 71 and the rotor 72. While Figure 17 shows the rotor 71 with its geometric center X coaxial with the geometric stator center 0, Figure 18 shows an eccentric arrangement. The clearance C between the rotor 71 and the stator 72 is non-uniform in Figure 18, and the smallest gap g is indicated again.

The stator 72 has a plurality of coils θ1-θn to drive the rotor 71 (that may have permanent or electric magnets).

Unbalanced magnetic pull is usually associated with non-uniform induction due to winding faults or rotor eccentricity conditions. Due to the non-uniform clearance C, the magnetic flux in the air gap is also non-uniform and this can be measured by the control system 2 that may be connected to the coils θ1-θn and/or to a control system of the electric machine 70 so as to receive signals therefrom. For example, magnetic induction in the coils θ1-θn may be measured, e.g., by measuring voltages and/or currents at the coils θ1-θn. For example, pairs of opposing coils θ1-θn may be compared, e.g., by the control system 2.

Thus, the electric machine 70 can detect an unbalance of the rotor 71. However, since the electric machine 70 is operatively connected to other parts of the driveline of the engine 10 core shown in Figure 2, it is also sensitive to unbalances from rotatable components of the driveline. Thus, the electrical machine 70 can be used as a vibration sensor and, more particularly as a sensor for an orbiting motion (of shaft 26). Since it may directly sense vibrations in the driveline, rather than by means of external sensors, a particularly high precision is possible without the need of any further sensors. To this end, the electrical machine 70 may provide signals indicative for (or derived from) the unbalanced magnetic pull to the control system 2, or it may pre-process unbalanced magnetic pull signals and provide processed signals, e.g. frequency spectra to the control system 2.

In the electrical machine 70 the electrical effects that are generated by a shaft movement induced by gap-dependent forces can be amplified to provide a gauge function that may be embedded within the drive itself, and that can be tuned to provide a highly sensitive measure of the gap variation of other rotatable components. It is worth noting that gap variations that generate gap-dependent vibrations are directly connected to the shaft clearances in the moment in which the measure takes place. This allows an optimized early detection of a loss of alignment or deterioration in the engine driveline. Detecting and monitoring gap-dependent vibrations and compare their trends with nominal baseline vibration levels (from look-up tables, a pass-off test and/or FEM simulations) by means of the control system 2 can keep under control a progressive deterioration of a broad range of mechanical wear or damage resulting in a loss of the initial rotor alignment. As an example, after the engine 10 assembly, the positions of the engine 10 rotatable components, i.e., the engine alignment, is determined (by measurement and/or by determination based on the design, the manufacturing tolerances and, optionally, balancing and alignment procedures).

The control system 2 and method described herein may use the electrical machine 70 to measure the frequency of sub-synchronous (or super-synchronous) orbits as a time-of-flight of gap g and/or a point between two coils or coil sectors (consecutive or not consecutive). By means of the signals measured by means of the plurality of n coils, the precession frequency of the rotor 71 may be determined. This determination can be made with particularly high precision, because the electrical machine 70 itself is used, instead of additionally mounted sensors. A phase delay between the different coils may be used to determine a frequency of the orbiting motion of the rotor 71.

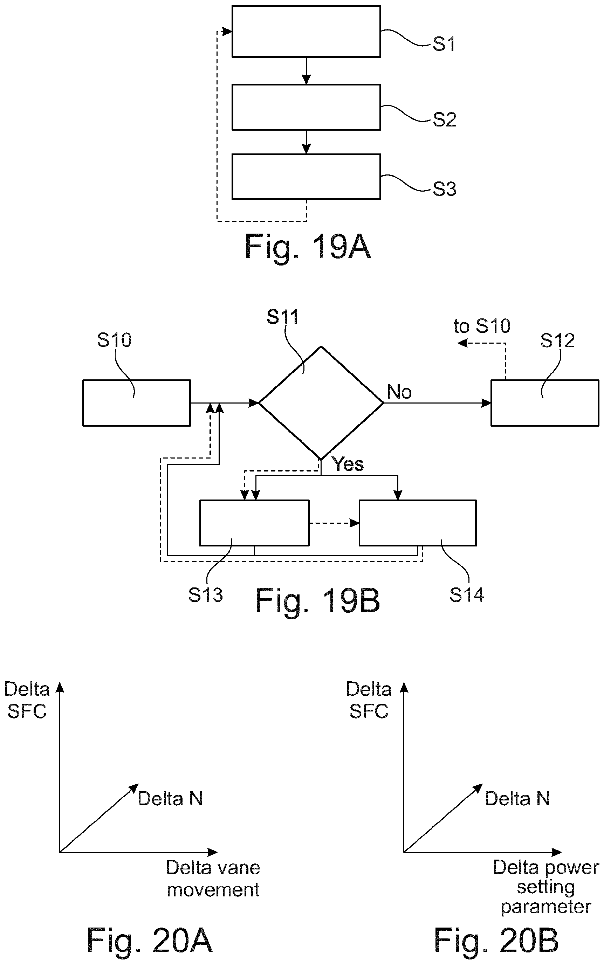

Figure 19A shows a method for controlling an apparatus having at least a first rotatable component and a second rotatable component that are, optionally, rotatable with a variable ratio of speeds, e.g. the apparatus 1 or the gas turbine engine 10. The method is for reducing vibrations at the apparatus.

The method comprises a first step S1 of determining, by the control system 2, a speed of each of the rotatable components, wherein at least one of the speeds is an orbiting speed of an orbiting motion of one of the rotatable components around a nominal rotational axis thereof. Optionally, also a motion in axial direction of one or more of the rotatable components is determined (e.g., at least one rotatable component that performs the orbiting motion).

The method further comprises a second step S2 of calculating a speed ratio R of the determined speeds of the first and second rotatable components (e.g., shafts 26, 27, 54) and, optionally, determining whether or not the calculated speed ratio R is within a predetermined interval (e.g., +/-10% or +/- 5%) around an integer value.

The method further comprises a third step S3 of controlling operation (e.g., rotation) of at least one of the rotatable components depending on the calculated speed ratio R, optionally including restricting the rotation of the rotatable components (e.g., shafts 26, 27, 54) to predetermined speed ratios by increasing or decreasing a speed of at least one of the rotatable components so as to avoid an integer ratio of speeds of the shafts, or using other counter-measures, particularly as described herein. Optionally, the step of controlling rotation is further based the determined axial motion of the one or more of the rotatable components.

The method may stop after the third step S3, or return to the first step S1 thereafter.

Figure 19B shows a method for controlling an apparatus in the form of an engine, having at least a first shaft and a second shaft (that may be rotatable with a variable ratio of speeds), e.g., the apparatus 1 or the gas turbine engine 10.

At step S10, a power setting demand for the engine is received.

At step S11, it is evaluated whether or not the shaft speeds of the shafts of the engine (one of which being an orbiting speed) are in a range for cross-excitation, e.g. at or close to an integer value, and/or whether or not the shaft speeds will enter such a range when the power setting demand is fulfilled. This may comprise performing steps S1 and S2 of Figure 19A. It may also comprise determining or predicting shaft speeds of the shafts when the power setting demand is fulfilled and performing step S2 of Figure 19A with these shaft speeds.

If it is evaluated in step S11 that the shafts are not and/or will not be in speed ranges prone for cross-shaft excitation, the method proceeds to step S12. Otherwise the method proceeds with steps S13 and S14.

At step S12 no change in the power setting demand is made. The power setting demand is fulfilled by correspondingly controlling the engine. The method may return to step S10.

At step S13, it is evaluated whether or not a variable device of the gas turbine engine is within an acceptable range of movement. Adjustment of the variable device, e.g., changes the speed of one or more of the shafts or the stiffness of its damping or bearing. For example, the acceptable range of movement may be a predetermined interval around a given set point. As a further example, the variable device is a variable stator vane of the gas turbine engine. The acceptable range may be an interval around a set point of the variable stator vane position, e.g. +/- 3%. The gas turbine engine may be a 3-shaft engine. In this case, the variable stator vane may be that of an intermediate-pressure shaft of the gas turbine engine, in particular of an intermediate-pressure compressor. Alternatively, the gas turbine engine may be a 2-shaft engine, in particular a geared 2-shaft engine (that may comprise a fan driven via a gearbox). In this case, the variable stator vane may be that of an intermediate-pressure compressor and/or of a high-pressure compressor of the gas turbine engine. Optionally, the gas turbine engine may be a turboprop engine, and the variable device may be a propeller pitch. The gas turbine engine may have a plurality of variable devices to be adjusted alternatively or in addition to one another in step S13. For example, a turboprop engine may have a variable propeller pitch and variable stator vanes, e.g., at a high-pressure compressor.

When the variable device is within the acceptable range of movement, the variable device is adjusted (within the acceptable range) so that, e.g., the speed of the shaft or its bearing is changed, particularly in such a way that the shafts do not enter or exit the speed range prone for cross-shaft excitation. Otherwise, the variable device is not adjusted in step S13.

At step S14, it is evaluated whether or not a current power setting demand is within an acceptable range around the power setting demand received in step S10, e.g. +/-1%. When this is the case, the current power setting demand overrides the power setting demand received in step S10. In other words, a received power setting demand is modified (within a predetermined range) so as to avoid shaft speed ranges prone for cross-shaft excitation. When the current power setting demand is not within an acceptable range around the power setting demand received in step S10 (or at an edge of the range), the power setting demand is not modified in step S14.

Steps S13 and S14 may be performed in parallel. Alternatively, the steps may be performed one after the other, e.g., first step S13, then step S14, as indicated in Figure 19B. Optionally, the performance of one step depends on the outcome of the other step. For example, step S14 is only performed when an adjustment (or when no adjustment) has been made in step S13 or vice versa.

It is noted that alternative embodiments of the method comprise step S13, but not step S14, or step S14, but not step S13.

After steps S13 and/or S14, the method returns to step S11.

Steps S13 and S14 are performed depending on a speed ratio of speeds of the shafts and thus control rotation of at least one of the shafts of the gas turbine engine depending on a speed ratio of speeds of the shafts, at least one of the speeds being an orbiting speed.

Optionally, steps S13 and S14 are performed in combination to move the adjustable device within the acceptable range and, additionally, modify the power setting demand within its acceptable range. This allows to optimize a specific fuel consumption (SFC) of the gas turbine engine.

It is thus possible to maintain an optimized engine performance while minimizing or eliminating integer speed conditions from a flight envelope.

Optionally, integer shaft speed ratios are only avoided in specific shaft speed ranges and/or during transient integer speed maneuvers.

Cross-shaft vibrations may occur when forces from a shaft are transmitted via a static structure, optional intershaft bearings and optional fluid, and excite a resonance of another shaft which happens to exist at the given speed condition.

Figures 20A and 20B show corresponding diagrams to indicate a change of the SFC ("delta SFC") depending on a variable stator vane adjustment ("delta vane movement") and a shaft speed change ("delta N"), see Figure 20A, and on a power setting demand adjustment ("delta power setting parameter") and the shaft speed change ("delta N"), see Figure 20B. For a given gas turbine engine the specific curves of the diagrams of Figures 20A and 20B are determined by measurements and/or simulations. When performing steps S13 and S14, a change in shaft speed ("delta N") is given (e.g., the change of the shaft speed necessary to exit the region of cross-shaft excitation) and the variable stator vane adjustment and power setting demand adjustment are modified so as to minimize the SFC. These settings may be determined from a look-up table.

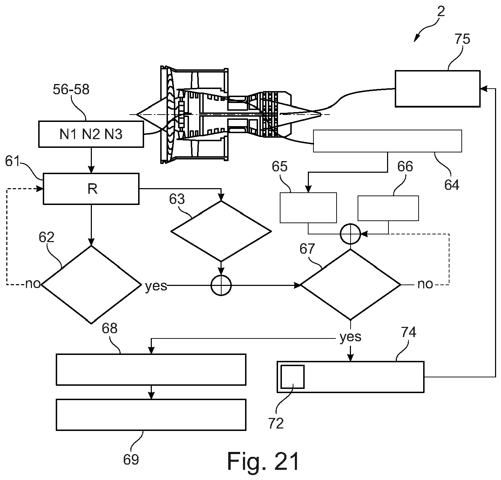

Figure 21 shows the control system 2. The apparatus (e.g., the apparatus 1 or the gas turbine engine 10) comprises at least one speed encoder or speed sensor 56-58 for each of its shafts to determine the speed of the respective shaft. Further, the apparatus may comprise at least one sensor to determine an orbiting motion of at least one of the shafts. Optionally, the sensors may be regarded as a part of the control system 2, or as a part of an arrangement comprising the control system 2 and the sensors.

The sensors (e.g., periodically or continuously) provide sensor readings indicative for the shaft speeds to a calculator 61 of the control system 2. Alternatively, or in addition, shaft rotational and/or orbit speeds may be read from a look-up table based on current operational parameters. The calculator 61 determines one or more shaft speed ratios R, e.g., a shaft speed ratio R, optionally, for each combination of two of the shafts based on the sensor (and/or look-up table) readings, wherein the respective ratio R is based on at least one orbiting speed. The calculator 61 provides the determined shaft speed ratio(s) R to a near-integer-speed-ratio detector 62. The near-integer-speed-ratio detector 62 determines whether or not the determined shaft speed ratio(s) R are within a predetermined distance or interval to an integer value. If this is not the case, the calculator 61 is invoked again. If this is the case, the near-integer-speed-ratio detector 62 triggers a resonance detector 67, e.g., informs the resonance detector 67 about the near-integer status. The near-integer-speed-ratio detector 62 may provide the speed ratio(s) to the resonance detector 67.

An optional state detector 63 may also receive the shaft speeds and/or the shaft speed ratio(s) R, and/or may be triggered, e.g., by the calculator 61. The state detector 63 may determine whether the shafts are in a steady state or in a transient state, e.g., moving at constant speeds or accelerating/decelerating, respectively. Optionally, the resonance detector 67 is only invoked when the state detector 63 determines a predetermined state, e.g., a transient state or a steady state.

Optionally, one or more vibration sensors 64 are part of the control system 2 and/or the apparatus and are adapted to generate vibration sensor readings indicative for vibrations in the apparatus. The vibration sensor(s) 64 provide the vibration sensor readings to an analyzer 65. The analyzer 65 determines vibration magnitudes (e.g., frequency-dependent, and/or vibration frequencies) based on the vibration sensor readings. When or more vibration magnitudes (e.g., at predetermined vibration frequencies) exceed a threshold stored in a storage 66, the resonance detector 67 is triggered. For example, the analyzer 65 provides the vibration magnitudes to the resonance detector.

Optionally, the resonance detector 67 detects incoming resonances before reaching a maximum.

When the resonance detector 67 is triggered by the near-integer-speed-ratio detector 62 and the analyzer 65, it activates an integer-speed avoidance system 74.

The integer-speed avoidance system 74 is operatively connected with one or more engine controllers 75. The engine controller(s) 75 are adapted to adjust engine parameters, e.g., variable stator vane positions and/or fuel flow and/or damping and/or bearing properties. The integer-speed avoidance system 74 may comprise an algorithm to avoid integer speed ratios so as to minimize vibrations while optimizing the engine performance in a flight envelope. Together with the engine controller(s) 75, the integer-speed avoidance system 74 may be adapted to perform the method steps S3, S13 and/or S14 of Figures 19A and 19B.

To ensure high engine performances throughout the whole flight envelope, the integer-speed avoidance system 74 may be adapted to detect if there is any conflict between the achievement of a performance target and the integer speed avoidance. If any disadvantage in regulating the speeds that provokes deterioration in the engine performance is detected, then it may determine whether or not to adjust set points of the engine controller(s) 75. In case the vibration levels trigger the activation of the integer-speed avoidance system 74 due to a detection of an incoming cross shaft resonance, the performance deterioration may be minimized to a given (e.g., the shortest possible) period of time. It may be provided that the integer-speed avoidance system 74 is only allowed to adjust set points of the engine controller(s) 75 when a level of vibration exceeds a given safety threshold.

The integer-speed avoidance system 74 optionally comprises a database 76 storing a plurality of possible operational statuses of the apparatus and appropriate speeds of the shafts for each operational status having no integer ratio. In particular, the database 76 may comprise at least one series of possible successive operational statuses and appropriate speeds of the shafts for each operational status having no integer ratio. By this, integer speed ratios may be prevented from occurring at different operational statuses before they occur.

The database 76 may be updated during operation of the apparatus, e.g., a flight of a gas turbine engine, after detecting an integer shaft speed ratio in an operational status.

Additionally, an optional counter 68 may be invoked that performs an algorithm for counting life cycles of the apparatus based on the detected speed ratios and vibration magnitudes. The counted life cycles are stored in a data storage 69 for storing life-consumption data. By this, wear parts of the apparatus may be effectively monitored and the timing of maintenance may be improved. In particular, it is possible to estimate the life consumption caused by cross-shaft system resonances. A complete life estimation may mitigate risks related to unexpected failures in flight and allows a reduction of repairs and unplanned maintenances of fleets.

The control system 2 may be adapted to perform the method according to Figure 19A and/or according to Figure 19B. Accordingly, the methods of Figures 19A and 19B may comprise method steps that correspond to one or more blocks of Figure 21 and/or described elsewhere herein. It is also worth noting that one or more blocks of Figure 21 may be implemented by hardware and/or software, and that one or more blocks of Figure 21 may be combined in one single block.

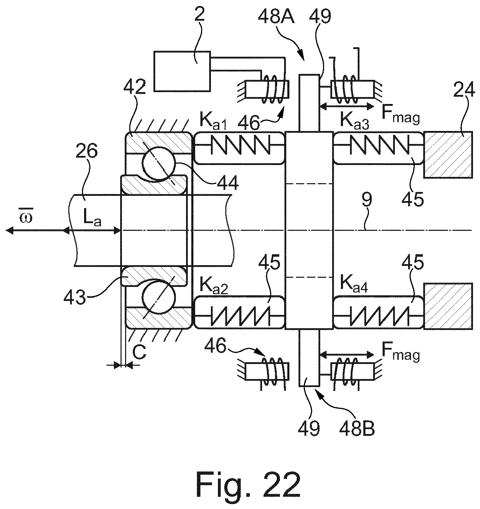

Turning now to Figure 22, a system of the gas turbine engine 10 (or, e.g., of the apparatus 1) will be described in detail.

The system comprises a first component, a second component, active devices 48A, 48B and the control system 2. The first component is rotatably mounted with respect to the second component, wherein a clearance C is provided that allows relative displacement of the first component with respect to the second component. In the present example, the first component is the shaft 26 that connects the low-pressure turbine 19 with the low-pressure compressor 14, but in general it could be any other shaft of the gas turbine engine 10 or another apparatus. The second component is, in this example, the stationary support structure 24, but it could alternatively be another component, e.g., another shaft, e.g., shaft 27. For brevity, the stationary support structure 24 will be referred to as structure 24 in the following.

The active devices 48A, 48B each are configured to apply a force on parts 45 that support the shaft 26 on the structure 24.

The control system 2 is adapted for controlling the active devices 48A, 48B based on a target value indicative for a range of a displacement, specifically for a maximum displacement of the shaft 26 with respect to the structure 24 and/or on a target value indicative for a stiffness of at least one of the shaft and the structure 24 as will be described in more details further below. For example, the control system 2 is a stiffness controller, in particular a non-contact stiffness controller.

In this example the shaft 26 is mounted rotatably with respect to the structure 24 by means of a bearing, which is a roller bearing comprising a stator 42 that is mounted at the structure 24, a rotor 43 that is mounted on the shaft 26, and a plurality of rolling elements 44. Thus, the bearing is a ball bearing in this example. The shaft 26 is rotatable with respect to the structure 24 about the rotational axis 9. In axial direction (with respect to the rotational axis 9) the stator 42 of the bearing is secured against the structure 24 by means of several parts 45. These parts may, for example, be or comprise a spacer, a washer, a seal or the like.

Due to production tolerances, wear, different temperatures or for other reasons there may be a play between some or all of the parts 45, the stator 42 and the structure 24. This may affect the clearance C (here, reference is made to the clearance C in axial direction) defined at the bearing and thus the possible axial displacement of the shaft 26 relative to the structure 24. Further, each of these parts 45 has a stiffness which is denoted as Ka1 to Ka4 in Figure 22, and illustrated conceptually as springs.

In order to control the clearance C and the maximum displacement of the shaft 26 with respect to the structure 24, the active devices 48A, 48B may be operated.

In this example, the active devices 48A, 48B comprise a plurality of coils 46 (in this example each coil 46 is wound around a core). Each of the coils 46 is operatively, e.g., electrically, connected to the control system 2. In the present example, each active device 48A, 48B comprises two coils 46, each one at opposing sides of an anchor 49, but alternatively it is conceivable that each active device comprises only one of such coils 46. Further it is to be emphasized that the system comprises more than the two active devices 48A, 48B, but a plurality of such active devices distributed around the rotational axis 9. On the other hand, in principle only one active device 48A would also be possible.

Each of the active devices 48A, 48B is configured to exert a non-contact force, more specifically, a magnetic force on another part of the system, in the arrangement as shown on the anchor 49. Depending on which of the coils 46 are supplied with electrical current (by one or more current supplies under control of the control system 2), a resulting force Fmag is applied on the anchor 49 (here: in axial direction) and thus on the parts 45 and on the structure 24 and/or on the stator 42 of the bearing. As a result, the (axial) clearance C becomes smaller or larger and the stiffness of the shaft 26 is reduced or increased.

The control system 2 is adapted for controlling the active device 48A, 48B based on a target value indicative for a stiffness of at least one of the shaft and the structure 24. As an alternative or in addition, the control system 2 is adapted for controlling the active device 48A, 48B based on a target value indicative for a maximum displacement of the shaft 26 with respect to the structure 24. Further, the control system 2 stores at least two different target values. The control system 2 controls the active device 48A, 48B (e.g., using the one or the other target value) based on the speeds of the two rotatable components (particularly based on the speed ratio), wherein at least one of the speeds is an orbiting speed.

In general, the interval of avoidance may be defined by means of a look-up table or triggered by the variation of a vibration parameter or engine performance indicator (e.g., temperature, pressure, torque, power, fuel specific consumption, speed), or by an e-drive current monitoring etc. or by a bearing, seals, air flow, variable nozzle geometry relevant parameter.

At any time the condition of the apparatus may be defined by an n-dimensional vector that univocally defines the operational performance point of the apparatus, e.g., on the aircraft. For a hybrid-electric apparatus, the status vector may include: shaft speeds, torque levels, propeller pitch angles, propeller axis orientation, power levels, variable vane angles, fuel specific consumption, temperatures, pressures, voltage levels, current levels battery levels, flight altitude and/or bank angles or the like.

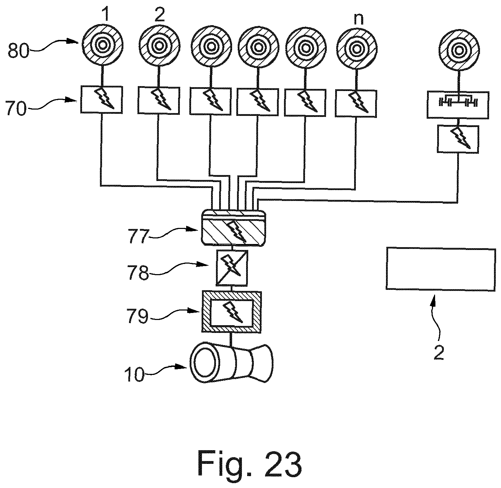

Figure 23 shows a propulsion apparatus for an aircraft (e.g., airplane 8). The propulsion system comprises a plurality of drivelines, each including a propeller 80 driven by a respective electrical machine 70. One or more of the propellers 80 may be driven via a gearbox (e.g., as gearbox 30). An energy storage 77 (e.g., a battery) provides electrical power to the electrical machines 70. A gas turbine engine (e.g., designed as gas turbine engine 10) drives a generator 79. The generator 79 provides electrical power to the energy storage 77, optionally via power electronics 78.

Vibrations in one driveline may interfere with vibrations in another driveline.

The propulsion apparatus also comprises the control system 2. Shafts connecting the electrical machines 70 with the respective propeller 80 and/or the propellers 80 are rotatable components of the apparatus which may be controlled by the control system 2. Thus, the control system 2 may determine a speed of each of two or more of the rotatable components, wherein at least one of the speeds is an orbiting speed of an orbiting motion of one of the rotatable components around a nominal rotational axis thereof; and control rotation of at least one of the rotatable components depending on a speed ratio of the speeds of the rotatable components.

Using the control system 2 and method described herein, the following is possible. A reduction of inter-shaft periodic modulations that generate cross-shaft excitations between two or more shafts and between one shaft and at least one orbit of another shaft, and a consequent reduction to the maximum extent or elimination of potential cross-shaft resonances causing cross-shaft orbits; a reduction of wear and tear caused by the periodicity between the loads applied to different shafts that is due to the integer speed ratio involving gap dependent orbits; a minimization or elimination of the drop of performance that is induced by gap-dependent forces due to the flow reaction to the gap variation; a minimization of unwanted fuel consumption due to gap dependent vibrations.

It will be understood that the invention is not limited to the embodiments above described and various modifications and improvements can be made without departing from the concepts described herein. Except where mutually exclusive, any of the features may be employed separately or in combination with any other features and the disclosure extends to and includes all combinations and sub-combinations of one or more features described herein.

For example, it is worth noting that the control system 2 and method described herein are applicable not only in gas turbine engines but also, e.g., in multi-shaft industrial power plants, rigs or other multi-shaft machinery, e.g., electrical motors or hybrid engines.

**List of reference numbers**

| | |
|---|---|
| 1 | apparatus |
| 2 | control system |
| 8 | airplane |
| 9 | principal rotational axis |
| 10 | gas turbine engine |
| 11 | engine core |
| 12 | air intake |
| 14 | low-pressure compressor |
| 15 | high-pressure compressor |
| 16 | combustion equipment |
| 17 | high-pressure turbine |
| 18 | bypass exhaust nozzle |
| 19 | low-pressure turbine |
| 20 | core exhaust nozzle |
| 21 | nacelle |
| 22 | bypass duct |
| 23 | propulsive fan |
| 24 | stationary support structure |
| 26 | shaft |
| 27 | interconnecting shaft |
| 28 | sun gear |
| 30 | gearbox |
| 32 | planet gears |
| 34 | planet carrier |
| 36 | linkages |
| 38 | ring gear |
| 40 | linkages |
| 41 | variable stator vane |
| 42 | stator |
| 43 | rotor |
| 44 | rolling element |
| 45 | part |
| 46 | coil |
| 48A, 48B | active device |
| 49 | anchor |
| 50 | intershaft bearing |
| 51 | damping |
| 52 | bearing |
| 53 | bearing |
| 54 | shaft |
| 55 | bearing |
| 56-58 | speed sensor |
| 59 | bearing |

| 61 | calculator |
| 62 | near-integer-speed-ratio detector |
| 63 | state detector |
| 64 | vibration sensor(s) |
| 65 | analyzer |
| 66 | storage |
| 67 | resonance detector |
| 68 | counter |
| 69 | data storage |
| 70 | electrical machine |
| 71 | rotor |
| 72 | stator |
| 74 | integer-speed avoidance system |
| 75 | engine controller |
| 76 | database |
| 77 | energy storage |
| 78 | power electronics |
| 79 | generator |
| 80 | propeller |
| 90 | oil system |
| 91 | oil cooler |
| 92 | servo valve |
| 93 | blade |
| 94 | casing |
| 97 | housing |
| 98 | rotor |
| A | core airflow |
| B | bypass airflow |
| B1, B2 | bearing |
| C | clearance |
| R | speed ratio |
| X | center |

**Claims**

1. A method for controlling an apparatus (1; 10) having at least a first rotatable component (26, 27, 32, 54) and a second rotatable component (26, 27, 32, 54), the method comprising:

   - determining (S1), by a control system (2), a speed of each of the rotatable components (26, 27, 32, 54), wherein at least one of the speeds is an orbiting speed of an orbiting motion of one of the rotatable components (26, 27, 32, 54) around a nominal rotational axis (9) thereof; and
   - controlling (S3), by the control system (2), rotation of at least one of the rotatable components (26, 27, 32, 54) depending on a speed ratio (R) of the speeds of the rotatable components (26, 27, 32, 54).

2. The method according to claim 1, wherein the first and/or second rotatable component (26, 27, 32, 54) is a shaft.

3. The method according to claim 1 or 2, wherein controlling rotation (S3) of the at least one of the rotational components (26, 27, 32, 54) depending on the speed ratio (R) is performed so as to restrict the speed ratio (R) of speeds of the shafts (26, 27, 54) to predetermined values.

4. The method according to any of the preceding claims, wherein controlling rotation (S3) of the at least one of the rotational components (26, 27, 32, 54) depending on the speed ratio (R) is performed so as to avoid an integer speed ratio (R).

5. The method according to any of the preceding claims, wherein both speeds of the rotational components (26, 27, 32, 54) are orbiting speeds.

6. The method according to any of the preceding claims, wherein determining the speed of each of the rotational components (26, 27, 32, 54) comprises measuring, by the control system (2), the speed of at least one of the rotational components (26, 27, 32, 54) using a speed sensor (56, 57, 58).

7. The method according to any of the preceding claims, wherein determining the at least one orbiting speed of one of the rotational components (26, 27, 32, 54) comprises measuring, by the control system (2), a frequency using a sensor wherein, optionally, an electrical machine (70) having a rotor (71) and a stator (72) rotatable with respect to one another acts as the sensor.

8. The method according to any of the preceding claims, wherein determining the speed of each of the rotational components (26, 27, 32, 54) comprises determining the speed of at least one of the rotational components (26, 27, 32, 54) by reading a value stored in a look-up table.

9. The method according to any of the preceding claims, further comprising calculating (S2) the speed ratio (R) of the determined speeds of the first and second rotational components (26, 27, 32, 54), and determining whether or not the calculated speed ratio (R) is within a predetermined interval around an integer, wherein, optionally, controlling rotation (S3) of the at least one of the rotatable components (26, 27, 32, 54) is performed in response to determining that the calculated speed ratio (R) is within the predetermined interval around an integer.

10. The method according to any of the preceding claims, wherein controlling rotation (S3) of at least one of the rotatable components (26, 27, 32, 54) comprises controlling at least one of the rotatable components (26, 27, 32, 54) so as to increase or decrease its rotational speed.

11. The method according to any of the preceding claims, controlling rotation (S3) of at least one of the rotatable components (26, 27, 32, 54) comprises decreasing or increasing a temperature and/or a pressure of a fluid and/or of a magnetic force.

12. The method according to any of the preceding claims, further comprising providing a database (76) storing a plurality of possible operational statuses of the apparatus (1; 10) and appropriate speeds of the rotatable components (26, 27, 32, 54) for each operational status having no integer ratio; and controlling the apparatus (1; 10) using the database (76).

13. A method for controlling an apparatus (1; 10), in particular according to any of the preceding claims, having at least a first rotatable component (26, 27, 32, 54) and a second rotatable component (26, 27, 32, 54), the method comprising:

   - determining (S1), by a control system (2), a frequency of a motion of each of the rotatable components (26, 27, 32, 54), wherein at least one of the motions is at least predominantly an axial motion of one of the rotatable components (26, 27, 32, 54); and
   - controlling (S3), by the control system (2), rotation of at least one of the rotatable components (26, 27, 32, 54) depending on a ratio (R) of the frequencies of the rotatable components (26, 27, 32, 54).

14. A control system (2) for controlling an apparatus (1; 10) having at least a first and a second rotatable component (26, 27, 32, 54), the control system (2) being adapted to perform the method according to any of the preceding claims.

15. An apparatus (1; 10) comprising at least two rotatable components (26, 27, 32, 54) and the control system (2) according to claim 14, wherein the apparatus is an engine (10).

Fig. 1

Fig. 2

Fig. 3

30

32

28

38

34

34

Fig. 4

Fig. 5

Fig. 6

Fig. 7

Fig. 8

Fig. 9

Fig. 10A

Fig. 10B

Fig. 11A

38

32

C

34

9

Fig. 11B

Fig. 12

Fig. 13

Fig. 14

## Fig. 15

## Fig. 16

## Fig. 17

## Fig. 18

S1

S2

S3

# Fig. 19A

S10

S11

to S10    S12

No

Yes

S13    # Fig. 19B    S14

Delta
SFC

Delta N

Delta vane
movement

# Fig. 20A

Delta
SFC

Delta N

Delta power
setting
parameter

# Fig. 20B

Fig. 21

Fig. 22

Fig. 23

Europäisches
Patentamt

European
Patent Office

Office européen
des brevets

# EUROPEAN SEARCH REPORT

Application Number

EP 21 21 1462

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 514 129 B1 (HALLEY DAVID G [US]) 4 February 2003 (2003-02-04) * abstract; figures 1, 2, 4-4B, 6 * * column 2, line 54 - column 4, line 7 * * column 11, line 13 - column 14, line 57 * | 1-14 | INV. F16F15/00 G05D19/00 F02C3/107 F02C9/00 |
| X | US 5 678 672 A (SUDAU JOERG [DE]) 21 October 1997 (1997-10-21) | 1,2,6,7, 10,11, 14,15 | |
| A | * abstract; figure 8 * * column 19, line 38 - column 20, line 63 * | 3,4,9,12 | |
| A | EP 3 734 109 A1 (ROLLS ROYCE DEUTSCHLAND LTD & CO KG [DE]; ROLLS ROYCE PLC [GB]) 4 November 2020 (2020-11-04) * the whole document * | 1-15 | |
| A | US 6 315 641 B1 (LEE KYU HONG [KR] ET AL) 13 November 2001 (2001-11-13) * abstract; figure 1 * * column 1, line 57 - column 3, line 43 * * column 4, line 31 - line 45 * | 5,13 | TECHNICAL FIELDS SEARCHED (IPC) F16F G05D F02C F02K |
| E | EP 3 992 594 A1 (ROLLS ROYCE DEUTSCHLAND LTD & CO KG [DE]) 4 May 2022 (2022-05-04) * abstract; figures 1-27 * * claims 1, 3-5, 6 * * paragraph [0029] - paragraph [0033] * * paragraph [0153] - paragraph [0167] * | 1,13,14 | |

The present search report has been drawn up for all claims

| Place of search | Date of completion of the search | Examiner |
|---|---|---|
| The Hague | 10 June 2022 | Maroño Martínez, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 21 1462

This annex lists the patent family members relating to the patent documents cited in the above-mentioned European search report.
The members are as contained in the European Patent Office EDP file on
The European Patent Office is in no way liable for these particulars which are merely given for the purpose of information.

10-06-2022

| Patent document cited in search report | | Publication date | Patent family member(s) | | Publication date |
|---|---|---|---|---|---|
| US 6514129 | B1 | 04-02-2003 | NONE | | |
| US 5678672 | A | 21-10-1997 | BR | 9505686 A | 11-11-1997 |
| | | | CA | 2164533 A1 | 08-06-1996 |
| | | | CN | 1132831 A | 09-10-1996 |
| | | | DE | 4443454 A1 | 20-06-1996 |
| | | | ES | 2129299 A1 | 01-06-1999 |
| | | | FR | 2728034 A1 | 14-06-1996 |
| | | | GB | 2295867 A | 12-06-1996 |
| | | | JP | 2929427 B2 | 03-08-1999 |
| | | | JP | H08226460 A | 03-09-1996 |
| | | | KR | 960023884 A | 20-07-1996 |
| | | | US | 5678672 A | 21-10-1997 |
| EP 3734109 | A1 | 04-11-2020 | NONE | | |
| US 6315641 | B1 | 13-11-2001 | AT | 308116 T | 15-11-2005 |
| | | | DE | 69927935 T2 | 06-07-2006 |
| | | | EP | 1031166 A1 | 30-08-2000 |
| | | | JP | 2002521839 A | 16-07-2002 |
| | | | KR | 20000012039 A | 25-02-2000 |
| | | | US | 6315641 B1 | 13-11-2001 |
| | | | WO | 0007230 A1 | 10-02-2000 |
| EP 3992594 | A1 | 04-05-2022 | EP | 3992594 A1 | 04-05-2022 |
| | | | US | 2022065688 A1 | 03-03-2022 |

EPO FORM P0459

For more details about this annex : see Official Journal of the European Patent Office, No. 12/82